(19) Europäisches Patentamt
European Patent Office
Office européen des brevets

(11) **EP 4 277 383 A1**

(12) **EUROPEAN PATENT APPLICATION**
published in accordance with Art. 153(4) EPC

(43) Date of publication:
**15.11.2023 Bulletin 2023/46**

(21) Application number: **21920371.8**

(22) Date of filing: **25.01.2021**

(51) International Patent Classification (IPC):
**H04W 72/02** (2009.01)     **H04W 72/04** (2023.01)

(52) Cooperative Patent Classification (CPC):
**H04W 72/02; H04W 72/04**

(86) International application number:
**PCT/CN2021/073676**

(87) International publication number:
**WO 2022/155979 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **ZHANG, Lili**
**Shenzhen, Guangdong 518129 (CN)**

• **DAI, Xizeng**
**Shenzhen, Guangdong 518129 (CN)**
• **LIU, Jianghua**
**Shenzhen, Guangdong 518129 (CN)**
• **ZHANG, Qian**
**Shenzhen, Guangdong 518129 (CN)**

(74) Representative: **Epping - Hermann - Fischer Patentanwaltsgesellschaft mbH Schloßschmidstraße 5 80639 München (DE)**

(54) **POWER CONTROL METHOD AND APPARATUS**

(57)     This application provides a power control method and an apparatus. The method includes: A terminal device determines a second power from at least one power based on a first power of a first reference signal. There is a correspondence between the at least one power and at least one parameter. The terminal device sends the first reference signal based on the second power. This application provides the power control method and the apparatus. The terminal device sends an uplink reference signal to enable UE to obtain more accurate path loss information. In this way, accuracy of a calculated path loss value is improved, and therefore, power control is better implemented.

FIG. 3

**EP 4 277 383 A1**

**Description**

**TECHNICAL FIELD**

This application relates to the communication field, and more specifically, to a power control method and an apparatus.

**BACKGROUND**

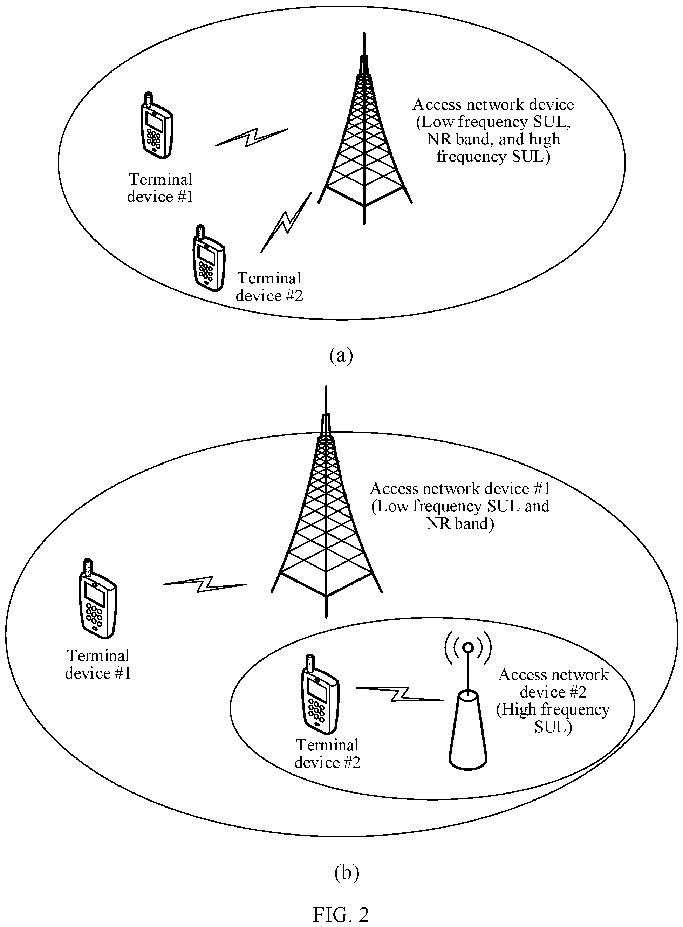

User equipment (user equipment, UE) obtains a path loss by measuring a downlink reference signal, to implement power control. However, in a supplementary uplink (supplementary uplink, SUL) or an uplink capacity expansion technology, few or no corresponding downlink reference signals are obtained, or a corresponding downlink reference signal cannot be obtained in time. Therefore, a path loss cannot be accurately obtained. For example, in (a) in FIG. 2, when base stations are co-sited, using a downlink path loss on a new radio (new radio, NR) band (band) as a reference value of a path loss on an SUL or an uplink capacity expansion link results in a deviation due to different frequencies. In (b) in FIG. 2, when base stations are non-co-sited, a small base station works on an SUL or an uplink capacity expansion link, and a macro base station works on an existing NR band. There is no reference path for a path loss on the SUL or the uplink capacity expansion link because paths are different. In (b) in FIG. 2, when the base stations are non-co-sited, and the small base station works on the SUL or the uplink capacity expansion link and has few downlink slots, the path loss on the SUL or the uplink capacity expansion link may be obtained based on downlink reference signals configured in the few downlink slots, but the few downlink reference signals results in untimely path loss update. The SUL or the uplink capacity expansion link may be of a relatively high frequency band, a high frequency band, or any frequency band whose bandwidth is higher than an existing bandwidth. The existing bandwidth may be 700 M, 800 M, 1.8 G, 2.1 G, 2.3 G, 2.6 G, or the like.

For an SUL or an uplink capacity expansion link, when few or no downlink reference signals are obtained or a downlink reference signal cannot be obtained in time, how to enable UE to obtain a path loss or path loss adjustment information becomes a technical problem that needs to be resolved currently.

**SUMMARY**

This application provides a power control method and an apparatus. An SUL or an uplink capacity expansion link sends an uplink reference signal to enable UE to obtain accurate path loss information and better implement power control.

According to a first aspect, a power control method is provided. Specifically, the method includes: determining a second power from at least one power based on a first power of a first reference signal, where there is a correspondence between the at least one power and at least one parameter; and sending the first reference signal based on the second power.

Based on the foregoing technical solution, a terminal device selects a power from the at least one power, and sends the first reference signal to a network device based on a determined power. In this way, the network device may obtain a power of the first reference signal, and determine path loss information based on the power of the first reference signal. Therefore, according to the power control method provided in this embodiment of this application, interference caused when the terminal device sends a first-type SRS on an active carrier may be reduced as much as possible, and it is ensured that a power value that corresponds to an SRS and that is used to determine a path loss is accurate. In this way, accuracy of path loss calculation is improved, and therefore, power control is better implemented.

In this embodiment of this application, the first reference signal is carried on a first link, and the first link is a supplementary uplink, an uplink capacity expansion link, an uplink-dominated link, a large uplink, or an uplink.

In this embodiment of this application, the first reference signal may also be extended to first uplink information. When the first reference signal is extended to the first uplink information, any one of a time-frequency resource of a reference signal, a sequence of a reference signal or an index that is included in the at least one parameter may be a reference signal carried in the first uplink information.

In this embodiment of this application, the first reference signal is used to determine a path loss, determine a range of the path loss, determine a signal strength, determine a range of the signal strength, determine a channel quality status, determine a range of the channel quality status, or determine a power control parameter, or perform mobility management on the first link.

In this application, sending the first reference signal based on the second power may also be understood as sending by using the second power, or sending at the second power.

With reference to the first aspect, in some possible implementations, the method further includes: obtaining a mapping relationship. The mapping relationship is a mapping relationship between the at least one power and the at least one parameter.

In this embodiment of this application, the mapping relationship may be sent by the network device to the terminal device, or may be preconfigured on the terminal device. Therefore, the terminal device sends the power of the first reference signal, and the network device may also learn of the power of the first reference signal based on the mapping relationship. In this way, accuracy of path loss calculation is improved while interference is reduced, and therefore, power control is better implemented.

With reference to the first aspect, in some possible implementations, the first power is a power determined based on a first power control parameter.

In other words, the terminal device may determine the power of the first reference signal based on the power control parameter sent by the network device and a power control formula.

In this embodiment of this application, the power control parameter may include a closed-loop power control parameter, a target power value, or a compensation factor. The compensation factor may be a path loss compensation factor.

With reference to the first aspect, in some possible implementations, the at least one parameter includes at least one of the following: a time-frequency resource of a reference signal, a sequence of a reference signal, or an index.

With reference to the first aspect, in some possible implementations, the at least one parameter is the time-frequency resource, and the sending the first reference signal based on the second power includes: sending, based on the second power, the first reference signal on a time-frequency resource corresponding to the second power.

In this application, "corresponding" may also be understood as associated or related.

In other words, the terminal device may determine the power of the first reference signal based on the power control parameter and the power control formula, select the second power from the at least one power based on the power of the first reference signal, determine the time-frequency resource corresponding to the second power, and send the first reference signal on the time-frequency resource corresponding to the second power, so that the network device determines the power of the first reference signal based on the corresponding time-frequency resource.

With reference to the first aspect, in some possible implementations, the at least one parameter is the sequence, and the method further includes: generating the first reference signal based on a sequence corresponding to the second power.

In other words, the terminal device may determine the power of the first reference signal based on the power control parameter and the power control formula, select the second power from the at least one power based on the power of the first reference signal, determine the sequence corresponding to the second power, and generate the first reference signal based on the sequence, so that the network device determines the power of the first reference signal based on the corresponding sequence.

The corresponding sequence may be distinguished based on a root sequence or a cyclic shift. With reference to the first aspect, in some possible implementations, the at least one parameter is the index, and the method further includes: sending first information to the network device. The first information includes or indicates an index corresponding to the second power.

In other words, the terminal device may determine the power of the first reference signal based on the power control parameter and the power control formula, select the second power from the at least one power based on the power of the first reference signal, determine the index corresponding to the second power, and send the index to the network device, so that the network device determines the power of the first reference signal based on the index.

With reference to the first aspect, in some possible implementations, the second power is a minimum power of one or more powers that are greater than or equal to the first power and that are of the at least one power. Alternatively, the second power is a maximum power of one or more powers that are less than or equal to the first power and that are of the at least one power.

Alternatively, the second power is a power that has a smallest deviation from the first power and that is of the at least one power.

In other words, in this embodiment of this application, the second power determined by the terminal device in the mapping relationship is close to the first power as much as possible. In this way, accuracy of path loss calculation may be improved, and power control may be better implemented.

With reference to the first aspect, in some possible implementations, in the at least one power, smaller two adjacent powers in terms of power magnitude indicate a greater difference between the two powers.

It may also be understood that a first difference is greater than a second difference. The first difference is a difference between an (N-2)th power and an (N-1)th power that are of the at least one power and that are sorted in ascending order of powers. The second difference is a difference between an (N-1)th power and an Nth power that are of the at least one power and that are sorted in ascending order of powers. N is a positive integer greater than or equal to 3. N is a positive integer greater than or equal to 3. Certainly, N may also be 2, and in this case, there is no difference between power levels.

In this embodiment of this application, the "difference" may be an absolute value of a difference between two adjacent power levels, or may be a difference between an (N-1)th power level and an (N-2)th power level.

In this embodiment of this application, based on the foregoing setting of the power, misdetermination during selection of the second power in the mapping relationship due to inaccurate radio frequency setting of UE may be avoided, and accuracy of a transmit power of the first reference signal is improved. In this way, accuracy of path loss calculation may be improved, and therefore, power control is better implemented.

With reference to the first aspect, in some possible implementations, the method further includes: receiving second information. The second information indicates a time-frequency resource of the first reference signal.

In a possible implementation, the second information indicates that last one or Z symbols of X uplink measurement signals are the time domain resource of the first reference signal.

In another possible implementation, the second information indicates that last one or Z symbols of Y PUSCHs are the time domain resource of the first reference signal.

In other words, in this embodiment of this application, the terminal device may receive the second information. The terminal device may determine a type of the uplink measurement signal on the active carrier based on the second information. The terminal device sends locations of two types of the uplink measurement signals.

With reference to the first aspect, in some possible implementations, the second information further indicates the terminal device to send the first reference signal.

With reference to the first aspect, in some possible implementations, the second information includes a bit indicating the terminal device to send the first reference signal. Alternatively, the second information includes a bit indicating the terminal device to send the first reference signal and a bit indicating the terminal device to send a second reference signal.

According to a second aspect, a power control method is provided. Specifically, the method includes: receiving a first reference signal; and determining a second power of the first reference signal. The second power is determined from at least one power based on a first power of the first reference signal, and there is a correspondence between the at least one power and at least one parameter.

Based on the foregoing technical solution, a network device may obtain a power of the first reference signal sent by a terminal device. This improves accuracy of path loss calculation, and therefore, power control is better implemented.

In this embodiment of this application, a mapping relationship is a mapping relationship between the at least one power and the at least one parameter. In this embodiment of this application, the mapping relationship is configured by the network device.

With reference to the second aspect, in some possible implementations, the first power is a power determined based on a first power control parameter.

With reference to the second aspect, in some possible implementations, the at least one parameter includes at least one of the following: a time-frequency resource of a reference signal, a sequence of a reference signal, or an index of a power.

With reference to the second aspect, in some possible implementations, the at least one parameter is the time-frequency resource of the reference signal, and the determining a second power of the first reference signal includes: determining a power corresponding to a time-frequency resource of the first reference signal as the second power.

In other words, the network device may determine the second power of the first reference signal based on the time-frequency resource and the mapping relationship. This improves accuracy of path loss calculation, and therefore, power control is better implemented.

With reference to the second aspect, in some possible implementations, the at least one parameter is the sequence of the reference signal, and the method further includes: determining a power corresponding to a sequence of the first reference signal as the second power.

In other words, the network device may determine the second power of the first reference signal based on the sequence and the mapping relationship. This improves accuracy of path loss calculation, and therefore, power control is better implemented.

With reference to the second aspect, in some possible implementations, the at least one parameter is the index, and the method further includes: receiving first information from the terminal device. The first information includes or indicates an index corresponding to the second power. The determining a second power of the first reference signal includes: determining the second power based on the index.

In other words, the network device may receive the first information, determine the index, determine the second power of the first reference signal based on the index and the mapping relationship. This improves accuracy of path loss calculation, and therefore, power control is better implemented.

With reference to the second aspect, in some possible implementations, the second power is a minimum power of one or more powers that are greater than or equal to the first power and that are of the at least one power. Alternatively, the second power is a maximum power of one or more powers that are less than or equal to the first power and that are of the at least one power. Alternatively, the second power is a power that has a smallest deviation from the first power and that is of the at least one power.

With reference to the second aspect, in some possible implementations, in the at least one power, smaller two adjacent powers in terms of power magnitude indicate a greater difference between the two powers.

In this embodiment of this application, based on the foregoing setting of the power, misdetermination during selection of the second power in the mapping relationship due to inaccurate radio frequency setting of UE may be avoided, and accuracy of a transmit power of the first reference signal is improved. In this way, accuracy of path loss calculation may be improved, and therefore, power control is better implemented.

With reference to the second aspect, in some possible implementations, the method further includes: sending second information. The second information indicates the time-frequency resource of the first reference signal.

In a possible implementation, the second information indicates that last one or Z symbols of X uplink measurement signals are the time domain resource of the first reference signal.

In another possible implementation, the second information indicates that last one or Z symbols of Y PUSCHs are the time domain resource of the first reference signal.

In other words, in this embodiment of this application, the network device may send the second information. The second information may indicate a type of the uplink measurement signal on the active carrier. The terminal device sends locations of two types of the uplink measurement signals. With reference to the second aspect, in some possible implementations, the second information further indicates the terminal device to send the first reference signal.

With reference to the second aspect, in some possible implementations, the second information includes a bit indicating the terminal device to send the first reference signal. Alternatively, the second information includes a bit indicating the terminal device to send the first reference signal and a bit indicating the terminal device to send a second reference signal.

It should be noted that the second reference signal in this application may be a reference signal in the conventional technology. For a method for sending the second reference signal, refer to the conventional technology.

According to a third aspect, this application provides a power control apparatus, including modules or units configured to perform the method in any possible implementation of the first aspect, for example, a processing module and a transceiver module. The transceiver module may include a sending module and a receiving module. The sending module and the receiving module may be different function modules, or may be a same function module that can implement different functions. The processing module may be implemented by using a processor. The transceiver module may be implemented by using a transceiver. Correspondingly, the sending module may be implemented by using a transmitter, and the receiving module may be implemented by using a receiver.

According to a fourth aspect, this application provides a power control apparatus, including modules or units configured to perform the method in any possible implementation of the second aspect, for example, a processing module and a transceiver module. The transceiver module may include a sending module and a receiving module. The sending module and the receiving module may be different function modules, or may be a same function module that can implement different functions. The processing module may be implemented by using a processor. The transceiver module may be implemented by using a transceiver. Correspondingly, the sending module may be implemented by using a transmitter, and the receiving module may be implemented by using a receiver.

According to a fifth aspect, a power control apparatus is provided, including a processor. The processor is coupled to a memory, and may be configured to execute instructions in the memory, to implement the method in any possible implementation of the first aspect. Optionally, the power control apparatus further includes the memory. Optionally, the power control apparatus further includes a communication interface, and the processor is coupled to the communication interface. In an implementation, the power control apparatus is a terminal device. When the power control apparatus is the terminal device, the communication interface may be a transceiver or an input/output interface.

In another implementation, the power control apparatus is a chip disposed in the terminal device. When the power control apparatus is the chip configured in the terminal device, the communication interface may be the input/output interface.

Optionally, the transceiver may be a transceiver circuit. Optionally, the input/output interface may be an input/output circuit.

According to a sixth aspect, a power control apparatus is provided, including a processor. The processor is coupled to a memory, and may be configured to execute instructions in the memory, to implement the method in any possible implementation of the second aspect. Optionally, the power control apparatus further includes the memory. Optionally, the power control apparatus further includes a communication interface, and the processor is coupled to the communication interface.

In an implementation, the power control apparatus is a terminal device. When the power control apparatus is the terminal device, the communication interface may be a transceiver or an input/output interface.

In another implementation, the power control apparatus is a chip disposed in the terminal device. When the power control apparatus is the chip configured in the terminal device, the communication interface may be the input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal by using the input circuit, and transmit a signal by using the output circuit, to enable the processor to perform the method in any possible implementation of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter, and is transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, and may receive a signal by using a receiver, and transmit a signal by using a transmitter, to perform the method in any possible implementation of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed on different chips. A type of the memory and a manner of disposing the memory and the processor are not limited in this embodiment of this application.

It should be understood that a related data exchange process such as sending indication information may be a process of outputting the indication information from the processor, and receiving capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any possible implementation of the first aspect and the second aspect.

According to a tenth aspect, a computer-readable medium is provided. The computer-readable medium stores a computer program (which may also be referred to as code or instructions). When the computer program is run on a computer, the computer is enabled to perform the method in any possible implementation of the first aspect and the second aspect.

According to an eleventh aspect, a chip is provided, including at least one processor and a communication interface. The communication interface is configured to receive a signal from another power control apparatus other than a power control apparatus, and transmit the signal to the processor, or send a signal from the processor to the another power control apparatus other than the power control apparatus. The processor is configured to implement the method in any possible implementation of the first aspect or the second aspect.

According to a twelfth aspect, a power control method is provided. Specifically, the method includes: sending a first reference signal based on a third power; and sending third information to a network device. The third information indicates whether the third power is determined based on a second power control parameter, and the second power control parameter is configured to determine a transmit power of the first reference signal.

Based on the foregoing technical solution, a terminal device may send the third information to the network device. The third information indicates whether the transmit power of the first reference signal is determined based on a power control parameter. A base station determines, by performing detection on the third information, a power value for sending the first reference signal by the terminal device, to determine path loss information. In this way, interference caused when the terminal device sends the first reference signal on an active carrier may be reduced as much as possible, and it is ensured that the power value that corresponds to the first reference signal and that is used to determine a path loss is accurate. In this way, accuracy of path loss calculation is improved, and power control may be better implemented.

With reference to the twelfth aspect, in some possible implementations, that the third information indicates whether the third power is determined based on a second power control parameter includes: the third information indicates whether the second power control parameter is successfully received.

In this embodiment of this application, successful reception by the terminal device includes: The terminal device detects downlink control information DCI (or another message) that is sent by the base station and that carries the power control parameter, and demodulates the power control parameter. Unsuccessful reception includes that the terminal device detects no DCI (or another message) that is sent by the base station and that carries the power control parameter, or that the terminal device detects the DCI (or another message) that is sent by the base station and that carries the power control parameter but fails to demodulate the power control parameter.

In this embodiment of this application, the "successful reception" may also be understood as correct reception.

With reference to the twelfth aspect, in some possible implementations, the third information is an acknowledgment ACK and/or a negative acknowledgment NACK for the second power control parameter.

With reference to the twelfth aspect, in some possible implementations, the method further includes: determining the third power based on a third power control parameter. A sending time of the third power control parameter is earlier than a sending time of the second power control parameter.

In other words, in this embodiment of this application, when the terminal device detects no DCI (or another message) that is sent by the base station and that carries the power control parameter, or the terminal device detects the DCI (or another message) that is sent by the base station and that carries the power control parameter but fails to demodulate the power control parameter, the terminal device determines, based on a power control parameter previously sent by the network device, a power for sending the first reference signal at this time.

With reference to the twelfth aspect, in some possible implementations, that the third information indicates whether the third power is determined based on a second power control parameter includes: the third information indicates that the third power is determined based on the second power control parameter; or the third information indicates that the third power is not determined based on the second power control parameter.

With reference to the twelfth aspect, in some possible implementations, second power control parameter information includes at least one of the following: a closed-loop power control parameter, a target power value, or a compensation factor.

With reference to the twelfth aspect, in some possible implementations, the third information is a bitmap including at least one bit. The at least one bit is in a one-to-one correspondence with at least one power control parameter. Alternatively, the at least one bit is in a one-to-one correspondence with at least one piece of signaling carrying the power control parameter.

With reference to the twelfth aspect, in some possible implementations, the at least one power control parameter is a power control parameter in at least one time unit in one time period.

In this embodiment of this application, the one time period is a periodicity value of a reference signal used for path loss measurement.

In this embodiment of this application, the time unit is a slot, a subframe, a mini-slot, a minisubframe, or the like.

According to a thirteenth aspect, a power control method is provided. Specifically, the method includes: receiving a first reference signal;

receiving third information from a terminal device, where the third information indicates whether a third power is determined based on a second power control parameter, and the second power control parameter is configured to determine a transmit power of the first reference signal; and determining the third power of the first reference signal based on the third information. With reference to the thirteenth aspect, in some possible implementations, that the third information indicates whether the third power is determined based on a second power control parameter includes: the third information indicates whether the second power control parameter is successfully received.

With reference to the thirteenth aspect, in some possible implementations, the third information is an acknowledgment ACK and/or a negative acknowledgment NACK for the second power control parameter.

With reference to the thirteenth aspect, in some possible implementations, that the third information indicates whether the third power is determined based on a second power control parameter includes: the third information indicates that the third power is determined based on the second power control parameter; or the third information indicates that the third power is not determined based on the second power control parameter.

With reference to the thirteenth aspect, in some possible implementations, the determining a third power of the first reference signal based on the third information includes: determining the third power based on a third power control parameter. A sending time of the third power control parameter is earlier than a sending time of the second power control parameter.

With reference to the thirteenth aspect, in some possible implementations, second power control parameter information includes at least one of the following: a closed-loop power control parameter, a target power value, or a compensation factor.

With reference to the thirteenth aspect, in some possible implementations, the second information is a bitmap including at least one bit. The at least one bit is in a one-to-one correspondence with at least one power control parameter. Alternatively, the at least one bit is in a one-to-one correspondence with at least one piece of signaling carrying a power control parameter.

With reference to the thirteenth aspect, in some possible implementations, the at least one power control parameter is a power control parameter in at least one time unit in one time period. According to a fourteenth aspect, this application provides a power control apparatus, including modules or units configured to perform the method in any possible implementation of the twelfth aspect.

According to a fifteenth aspect, this application provides a power control apparatus, including modules or units configured to perform the method in any possible implementation of the thirteenth aspect.

According to a sixteenth aspect, a power control apparatus is provided, including a processor. The processor is coupled to a memory, and may be configured to execute instructions in the memory, to implement the method in any possible implementation of the twelfth aspect. Optionally, the power control apparatus further includes the memory. Optionally, the power control apparatus further includes a communication interface, and the processor is coupled to the communication interface.

In an implementation, the power control apparatus is a terminal device. When the power control apparatus is the terminal device, the communication interface may be a transceiver or an input/output interface.

In another implementation, the power control apparatus is a chip disposed in the terminal device. When the power control apparatus is the chip configured in the terminal device, the communication interface may be the input/output interface.

Optionally, the transceiver may be a transceiver circuit. Optionally, the input/output interface may be an input/output circuit.

According to a seventeenth aspect, a power control apparatus is provided, including a processor.

The processor is coupled to a memory, and may be configured to execute instructions in the memory, to implement the method in any possible implementation of the thirteenth aspect. Optionally, the power control apparatus further includes the memory. Optionally, the power control apparatus further includes a communication interface, and the processor is coupled to the communication interface.

In an implementation, the power control apparatus is a terminal device. When the power control apparatus is the terminal device, the communication interface may be a transceiver or an input/output interface.

In another implementation, the power control apparatus is a chip disposed in the terminal device. When the power control apparatus is the chip configured in the terminal device, the communication interface may be the input/output interface.

Optionally, the transceiver may be a transceiver circuit. Optionally, the input/output interface may be an input/output circuit.

According to an eighteenth aspect, a processor is provided, including an input circuit, an output circuit, and a processing circuit. The processing circuit is configured to receive a signal by using the input circuit, and transmit a signal by using the output circuit, to enable the processor to perform the method in any possible implementation of the twelfth aspect and the thirteenth aspect. In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter, and is transmitted by the transmitter, and the input circuit and the output circuit may be a same circuit, where the circuit is used as the input circuit and the output circuit at different moments. Specific implementations of the processor and the various circuits are not limited in embodiments of this application.

According to a nineteenth aspect, a processing apparatus is provided, including a processor and a memory. The processor is configured to read instructions stored in the memory, and may receive a signal by using a receiver, and transmit a signal by using a transmitter, to perform the method in any possible implementation of the twelfth aspect and the thirteenth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed on different chips. A type of the memory and a manner of disposing the memory and the processor are not limited in this embodiment of this application.

It should be understood that a related data exchange process such as sending indication information may be a process of outputting the indication information from the processor, and receiving capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the nineteenth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twentieth aspect, a computer program product is provided. The computer program product includes a computer program (which may also be referred to as code or instructions). When the computer program is run, a computer is enabled to perform the method in any possible implementation of the twelfth aspect and the thirteenth aspect.

According to a twenty-first aspect, a computer-readable medium is provided. The computer-readable medium stores a computer program (which may also be referred to as code or instructions). When the computer program is run on a computer, the computer is enabled to perform the method in any possible implementation of the twelfth aspect and the thirteenth aspect.

According to a twenty-second aspect, a chip is provided, including at least one processor and a communication interface. The communication interface is configured to receive a signal from another power control apparatus other than a power control apparatus, and transmit the signal to the processor, or send a signal from the processor to the another power control apparatus other than the power control apparatus.

The processor is configured to implement, by using a logic circuit or by executing code instructions, the method in any design of the twelfth aspect and the method in any possible implementation of the thirteenth aspect.

According to the power control method and the apparatus provided in embodiments of this application, sending an uplink reference signal enables UE to obtain accurate path loss information and better implement power control.

## BRIEF DESCRIPTION OF DRAWINGS

FIG. 1 is a schematic diagram of a scenario to which an embodiment of this application is applied;
FIG. 2 is another schematic diagram of a scenario to which an embodiment of this application is applied;
FIG. 3 is a schematic diagram of a power control method according to an embodiment of this application;
FIG. 4 is a schematic diagram of a power control method according to an embodiment of this application;
FIG. 5 is a schematic diagram of a power control method according to an embodiment of this application;
FIG. 6 is a schematic diagram of a power control method according to an embodiment of this application;
FIG. 7 is a schematic diagram of a power control method according to an embodiment of this application;
FIG. 8 is a schematic diagram of a power control apparatus according to an embodiment of this application; and
FIG. 9 is a schematic diagram of a power control apparatus according to an embodiment of this application.

## DESCRIPTION OF EMBODIMENTS

The following describes technical solutions in this application with reference to accompanying drawings.

A wireless communication system to which embodiments of this application may be applied includes but is not limited to a global system for mobile communication (global system for mobile communication, GSM), a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next generation communication system (for example, a 6G communication system), a converged system of a plurality of access systems, or an evolved system.

The technical solutions provided in this application may be further applied to machine type communication (machine type communication, MTC), a long term evolution-machine type communication technology (Long Term Evolution-machine, LTE-M), a device-to-device (device-to-device, D2D) network, a machine to machine (machine to machine, M2M) network, an internet of things (internet of things, IoT) network, or another network. The IoT network may include, for example, the internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. A terminal device in embodiments of this application may include various access terminals, mobile devices, user terminals, or user apparatuses that have a wireless communication function. For example, the terminal device may be user equipment (user equipment, UE), for example, a mobile phone (mobile phone), a pad (pad), a computer with a wireless transceiver function, a virtual reality (virtual reality, VR) terminal device, or an augmented reality (augmented reality, AR) terminal device. The terminal device may alternatively be a wireless terminal in industrial control (industrial control), a machine type communication (machine type communication, MTC) terminal, customer premise equipment (customer premise equipment, CPE), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

A radio access network device in embodiments of this application may be an access device used by the terminal device to access the mobile communication system in a wireless manner. The radio access network device may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), a macro base station or a micro base station, a high frequency base station, or the like. The radio access network device may alternatively be a next generation NodeB (next generation NodeB, gNB) in an NR system, or may be a component or a part of a device included in a base station, for example, a central unit (central unit, CU), a distributed unit (distributed unit, DU), or a baseband unit (baseband unit, BBU). It should be understood that a specific technology used by and a specific device form of a radio access network device are not limited in embodiments of this application. In this application, the radio access network device is referred to as a network device for short. Unless otherwise specified, in this application, all network devices are radio access network devices. In this application, the network device may be a network device itself, or may be a chip used in the network device to complete a wireless communication processing function.

In a 5G new radio (new radio, NR) system, a transmit power of a base station is high and radio waves may be transmitted a long distance away. However, a transmit power of the terminal device is low, and uplink coverage is limited. Consequently, a received signal strength of an uplink transmission signal upon arrival at a base station may be insufficient to ensure coverage performance of the terminal device. In addition, an uplink spectrum may also be insufficient. Consequently, it is impossible to ensure uplink coverage performance of the terminal device by relying on data retransmission.

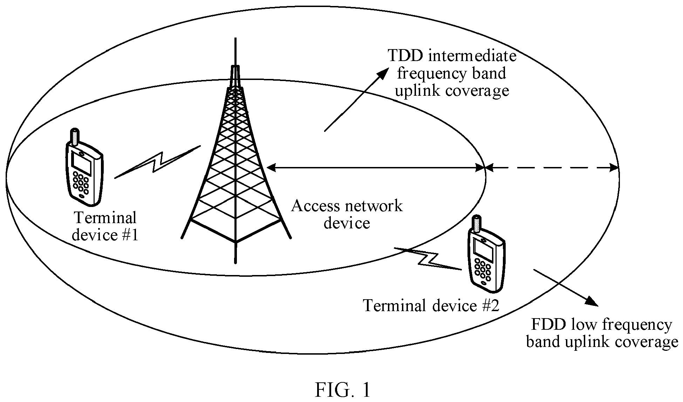

As shown in FIG. 1, currently, a supplementary uplink (supplementary uplink, SUL) is introduced into NR, to serve as a candidate used when uplink coverage in the NR system is insufficient. A low frequency band of long term evolution (long term evolution, LTE) usually has better coverage performance, and in the low frequency band (for example, 700 MHz, 1.8 GHz, or 2.1 GHz) of LTE, carriers are considered to be used for NR uplink transmission in the SUL. Currently, it is already determined that, when performing NR transmission by using the LTE frequency band, a terminal device may multiplex the frequency band with LTE uplink time division duplex (time division duplex, TDD). In other words, when the terminal device is within a coverage area of a TDD intermediate frequency band (2.6 GHz, 3.5 GHz, or 4.9 GHz), UE uses the TDD intermediate frequency band. When the terminal device moves out of the coverage area of the TDD intermediate frequency band (2.6 GHz, 3.5 GHz, or 4.9 GHz), in an uplink, the terminal device may use a frequency division duplex (frequency division duplex, FDD) low frequency band. This makes up for an uplink coverage weakness of the TDD intermediate frequency band, and extends an uplink coverage area. Certainly, with future evolution, in the uplink, the terminal device may also use another TDD frequency band as the supplementary uplink, to further extend the uplink coverage area.

In other words, an NR uplink is affected by a limited power of the terminal device and an insufficient uplink spectrum. Currently, the supplementary uplink SUL is introduced into NR, to serve as the candidate used when the uplink coverage in the NR system is insufficient. It is considered that when the terminal device transmits uplink data in an NR band, namely, an NUL (normal uplink) (for example, 2.6 GHz), a carrier in the low frequency band (700 MHz/800 MHz, 1.8 GHz, or 2.1 GHz) of LTE may be used for the NR uplink transmission, and the carrier is referred to as an SUL.

As described above, the SUL is on a low frequency band, denoted as an SUL 1 band. However, a bandwidth of a high frequency band is greater than a bandwidth of a low frequency band and has more resources. In addition, location mobility of the terminal device is considered. If the terminal device moves to a place close to a base station, although the terminal device is within an NR coverage area, if there is a high frequency band signal, the terminal device may use a resource on the high frequency band to perform a service such as data transmission. In this way, user service experience may be better ensured, and usage pressure of a bandwidth or a time-frequency resource is reduced. Therefore, a case in which the SUL is on the high frequency band is further considered in this application. The resource on the high frequency band may be at least one of a time domain resource, a frequency domain resource, or a spatial domain resource. The high frequency band may be a frequency band higher than 6 GHz, may be a frequency band higher than a current NR uplink frequency band, or may be a frequency band higher than the SUL 1 band. The high frequency band is denoted as an SUL 2 band. For example, currently, a new 4.9 GHz spectrum has a prospect of being used. The 4.9 GHz spectrum provides a spectrum time-frequency resource with a higher bandwidth, and provides more sufficient uplink time-frequency resources. Therefore, uplink coverage expansion on the spectrum may be considered. In this application, the SUL 2 band higher than the NR uplink frequency band is selected as an example, but this is not limited thereto. In embodiments of this application, the high frequency SUL 2 band is described relative to the NUL. In other words, the SUL 2 band in this application is at least higher than the NUL.

In this application, the NUL is used as an example of a first frequency band, the SUL 1 band is used as an example of a second frequency band, and the SUL 2 band is used as an example of a third frequency band. This is merely an example rather than a limitation.

FIG. 2 is a schematic diagram of an application scenario in a case of this application. (a) in FIG. 2 is a co-site scenario. Co-site means that a new high frequency spectrum SUL 2 band is added to a macro base station, for example, 4.9 GHz. (b) in FIG. 2 is a non-co-site scenario. Non-co-site means that there are an SUL 1 band and an NR band on a macro base station, but a new high frequency spectrum SUL 2 band is used on a small base station, for example, 4.9 GHz in a factory coverage scenario. The non-co-site may alternatively mean that there is an NR band on a macro base station, but a new high frequency spectrum SUL 2 band is used on a small base station.

Embodiments of this application may be applied to a communication system having an SUL link, for example, may be applied to a communication system having a low frequency SUL (SUL 1 band) link and/or a high frequency SUL (SUL 2 band) link. However, the application scenario of embodiments of this application is not limited thereto. For example, embodiments may be further applied to a scenario of an uplink capacity expansion link, uplink spectrum expansion, an uplink-dominated link, a large uplink, or an uplink.

In an embodiment, a terminal device needs to periodically send an uplink measurement signal with a preset power value, to implement path loss adjustment. The preset power value may be 23 dBmw or 26 dBmw. There may be a plurality of candidate uplink carriers on the SUL 2 band. Therefore, switching (switching) or retuning (retuning) between different carriers based on a periodicity value is needed. The periodicity value may be configured by a network device through radio resource control (radio resource control, RRC) signaling. An uplink measurement signal of 23 dBmw or 26 dBmw is periodically sent without consideration of a distance between the terminal device and the base station. Consequently, power consumption and unnecessary interference to peripheral data transmission are caused. In other words, path loss measurement for the SUL easily causes interference to system communication.

Solutions in the following embodiments further resolve how to reduce interference caused by sending an uplink reference signal as much as possible and improve accuracy of path loss calculation during path loss measurement or adjustment.

Usually, the terminal device obtains a path loss by measuring a downlink reference signal, to implement power control. The high frequency SUL is used as an example. There is no corresponding downlink reference signal on an extended SUL 2 band. Therefore, the path loss cannot be obtained. When the base stations are co-sited, using a downlink path loss on the NR band as a reference value of the path loss on the SUL 2 band results in a deviation due to different frequencies. When the base stations are non-co-sited, the small base station works on the SUL 2 band, and the macro base station works on the NR band. There is no reference path for the path loss on the SUL 2 band due to different frequencies.

The terminal device may send the uplink measurement signal to the base station by using a preconfigured power value. Alternatively, the terminal device additionally adds a transmit power value to a sequence of the uplink measurement signal. The uplink measurement signal may be a sounding reference signal (sounding reference signal, SRS), and is used to determine an UL carrier active set from an uplink carrier measurement set. The preconfigured power value may be 23 dBmw. The base station determines, based on detection of the uplink measurement signal, an active carrier that can be used for uplink data communication. The base station can derive a path loss based on a signal strength of the uplink measurement signal, and feed back the path loss to the terminal device as a reference path loss of uplink power control.

However, when the macro base station may further work on the SUL 2 band in addition to the NUL or in addition to the NUL and the SUL 1 band, the terminal device needs to send the SRS on a plurality of carriers of the SUL 2 band, to determine an active carrier. This may alternatively be understood as determining path loss adjustment. The uplink measurement signal of 23 dBmw needs to be sent periodically, to implement the path loss adjustment. There may be a plurality of candidate uplink carriers on the SUL 2 band, and therefore switching between different carriers is needed. The switching may be performed back and forth based on a periodicity value. In this application, the switching may alternatively be understood as converting or polling.

Although a periodicity of sending the SRS by the terminal device is a long periodicity, switching needs to consume radio frequency tuning time. Switching to a target carrier and switching from the target carrier need to occupy several symbols. This is an unnecessary loss of a system time-frequency resource. In addition, the switching occupies one radio frequency chain, affecting a unique uplink radio frequency chain used for data transmission. In addition, the 23 dBmw all along is used without consideration of the distance between the terminal device and the base station.

Consequently, the power consumption and the unnecessary interference to data transmission around the system are caused.

It should be noted that, in the communication system having the SUL link, the network device may send information to the terminal device by using a downlink of the NR band. For example, path loss information or path loss adjustment information sent by the network device to the terminal device may be sent by using DCI (downlink control information, DCI) in an NR downlink slot. When there is a downlink slot (for example, a few downlink slots) on the SUL 2 band, a downlink of the SUL 2 band may be used. For example, the path loss information or the path loss adjustment information sent by the network device to the terminal device may be sent by using DCI in the SUL 2 band downlink slot.

It should be noted that the schematic diagram of scenarios shown in FIG. 1 and FIG. 2 are only intended to describe the technical solutions of this application more clearly, but are not intended to limit this application. A person of ordinary skill in the art may know that as a network architecture evolves and a new service scenario emerges, the technical solutions provided in this application are also applicable to a similar technical problem.

Embodiments of this application provide a power control method, so that interference caused by sending an uplink reference signal is reduced as much as possible, and accuracy of path loss value calculation is improved, to better implement power control. In addition, embodiments of this application may be used to determine an active carrier on a high spectrum of an uplink, so that the terminal device performs uplink data transmission or send a reference signal on the active carrier. It should be noted that a second-type uplink measurement signal in embodiments of this application may be an uplink reference signal (which is an example of a second reference signal) used for channel state estimation in a conventional technology, and a first-type uplink measurement signal indicates an uplink reference signal (which is an example of a first reference signal) used for measurement. Measurement on the first-type uplink measurement signal may be any one or more of determining a path loss (path loss), determining a path loss (path loss) range, determining a signal strength, determining a signal strength range, determining a channel quality status, determining a channel quality status range, determining a power control parameter, or performing mobility management. The measurement on the first-type uplink measurement signal needs to be fed back to the terminal device. Measurement on the second-type uplink measurement signal is used by the network device for scheduling, and does not need to be fed back to the terminal device. It should be understood that the uplink measurement signal may be an SRS, a preamble (preamble), a demodulation reference signal (demodulation reference signal, DMRS), any defined sequence (sequence), or the like.

In addition to the reference signal, the uplink measurement signal in this application may alternatively be a sequence signal in a sequence signal set having good correlation features. The good correlation features mean that any sequence in the set has a large autocorrelation peak, and any two sequences in the set have a small cross-correlation peak. To be specific, in embodiments of this application, a sending device may send a plurality of signals, and at least one of the signals is the sequence signal having the good correlation features, for example, a pseudo random (pseudo random) sequence and a Zadoff-chu (Zadoff-chu) sequence.

Specifically, correlation means that correlation calculation is performed between one sequence signal and another sequence signal that are in a same set, to obtain a correlation value. Therefore, for the sequence signal having the good correlation features, a receiving device can detect, based on the correlation features, whether the signal exists. In other words, the sequence signal having the correlation features is transmitted without a need to use a detection mechanism such as a pilot. A reference signal (or a pilot signal) may be an example of signals having the good correlation features.

It should be understood that the foregoing enumerated specific examples of the sequence signal are merely examples for description, and this application is not limited thereto. For example, the sequence signal may alternatively be a signal used to carry feedback information (for example, acknowledgment (acknowledgement, ACK) information or negative acknowledgement (negative acknowledgement, NACK) information), a time-frequency resource request signal, or a measurement request signal.

By way of example, and not limitation, in embodiments of this application, an example in which the terminal device is UE is used for description, and an example in which a radio access network device is a base station is used for description. The following uses an example in which the first-type uplink measurement signal is used to determine a path loss, but this is not limited thereto. The path loss in embodiments of this application may be equally replaced with a path loss range, a signal strength, a signal strength range, a channel quality status, a channel quality status range, or a power control parameter. Details are not described below again.

In embodiments of this application, when sending data on the active carrier, the UE may include the first-type uplink measurement signal and the second-type uplink measurement signal. The second-type uplink measurement signal may be used to detect a channel status, and the first-type uplink measurement signal is used to measure a path loss of an SUL. In embodiments of this application, an example in which the uplink measurement signal is the SRS is used for description. However, this does not constitute any limitation on this application. This application does not exclude that the uplink measurement signal is another reference signal such as the DMRS. Details are not described below again.

It should be noted that the active carrier may also be referred to as a working carrier, or any carrier used for supplementary uplink or uplink extension transmission.

For example, when sending data on the active carrier, the UE may also transmit the second-type uplink measurement (for example, a second-type SRS) and the first-type uplink measurement (for example, a first-type SRS). As described above, the second-type SRS may be used to detect the channel status, and the first-type SRS may be used to measure a path loss.

In a possible implementation, the base station may preconfigure a mapping relationship. The mapping relationship in embodiments of this application may be a mapping relationship between a plurality of powers and a plurality of parameters. The parameter herein may be a time-frequency resource, a sequence, or an index (index).

The UE may first determine a power of the first-type SRS based on the power control parameter and a power control formula, then select a power level (power level) close to the power of the first-type SRS from the mapping relationship, and send the reference signal to the base station by using a corresponding time-frequency resource and/or sequence, or include an index corresponding to the power level in uplink control information (uplink control information, UCI). The base station receives the uplink measurement signal, and may determine, based on a transmission configuration (the corresponding time-frequency resource/or sequence) used by the UE or the index carried in the UCI, a transmit power of an uplink signal, to calculate path loss information or path loss adjustment information and send the path loss information or the path loss adjustment information to the UE. The UE may calculate, based on a new path loss, a transmit power of uplink data and/or the uplink signal that is to-be-transmitted.

According to the method in embodiments of this application, interference caused by sending the uplink reference signal is reduced as much as possible, and accuracy of path loss calculation is improved, to better implement power control.

It should be noted that the time-frequency resource in this application may be understood as at least one of a time domain resource or a frequency domain resource. Details are not described below again.

It should be noted that in this application, "corresponding" may also be understood as "associated" or "related". Details are not described below again.

It should be noted that in this application, "according to" may also be understood as "based on" or "in accordance with". Details are not described below again.

It should be noted that the power control parameter in embodiments of this application may include a closed-loop power control parameter, a target power value, or a compensation factor. The compensation factor may also be referred to as a path loss compensation factor. The UE may receive a power parameter from the network device, and then calculate the power of the first-type SRS based on the power control formula.

It should be understood that the power control formula in this application may be a power control formula used for an uplink signal (for example, an SRS or a physical random access channel (physical random access channel, PRACH)) or uplink data (for example, a physical uplink shared control channel (physical uplink shared channel, PUSCH) or a physical uplink control channel (physical uplink control channel, PUSCH)) in an existing standard. Details are as follows:

$$P_{SRS,b,f,c}(i,q_s,l) = \min \begin{Bmatrix} P_{CMAX,f,c}(i) \\ P_{O\_srs,b,f,c}(q_s) + 10\log_{10}(2^{\mu} \cdot M_{SRS,b,f,c}(i)) + \alpha_{SRS,b,f,c}(q_s) \cdot PL_{b,f,c(q_d)} + h_{b,f,c}(i,l) \end{Bmatrix}$$

$P_{CMAX,f,c}(i)$ is a maximum transmit power of the user equipment UE in an $i^{th}$ subframe; $h_{b,f,c}(i,l)$ is a parameter related to closed-loop power adjustment; $M_{SRS,b,f,c}(i)$ is a transmission bandwidth of the SRS; $P_{O\_srs,b,f,c}(q_s)$ is a target power parameter value of the SRS; $\alpha_{SRS,b,f,c}(q_s)$ is a path loss compensation factor; and $PL_{b,f,c(q_d)}$ is a downlink path loss estimation value.

Specifically, in an open-loop case, the transmit power of the SRS may be determined by using the following formula:

$$P_{SRS,c1}(i) = \min \left\{ P_{CMAX,c1}(i), P_{SRS\_OFFSET,c1}(m) + 10\log_{10}(M_{SRS,c1}) + P_{O\_SRS,c1}(j) + \alpha_{SRS,c1}(j) \cdot PL_{c1} \right\}$$

$P_{CMAX,c1}(i)$ is a maximum transmit power of the user equipment UE in an $i^{th}$ subframe on a switched carrier C1; $P_{SRS\_OFFSET,c1}(m)$ is a transmit power adjustment value of the SRS, where $m$ is 0 or 1; $M_{SRS,c1}$ is a transmission bandwidth of the SRS; $P_{O\_SRS,c1}(j)$ is a target power parameter value of the SRS, where 7 is 0, 1, or 2; $\alpha_{SRS,c1}(j)$ is a path loss compensation factor; and $PL_{c1}$ is a downlink path loss estimation value.

Further, determining the transmit power of the SRS based on the power control parameter of the SRS includes: obtaining the transmit power of the SRS based on at least one of a maximum transmit power of the user equipment UE, the transmit power adjustment value of the SRS, the transmission bandwidth of the SRS, the target power parameter value of the SRS, the path loss compensation factor, the downlink path loss estimation value, and the closed-loop power control parameter of the SRS.

Specifically, in a closed-loop case, the transmit power of the SRS may be determined by using the following formula:

$$P_{SRS,c1}(i) = \min\left\{P_{CMAX,c1}(i), P_{SRS\_OFFSET,c1}(m) + 10\log_{10}(M_{SRS,c1}) + P_{O\_SRS,c1}(j) + \alpha_{SRS,c1}(j) \cdot PL_{c1} + f_{SRS,c1}(i)\right\}$$

. $f_{SRS,c1}(i)$ is a closed-loop power control parameter value of the SRS. $P_{SRS\_OFFSEF,c1}(m)$ in the foregoing formula may be 0.

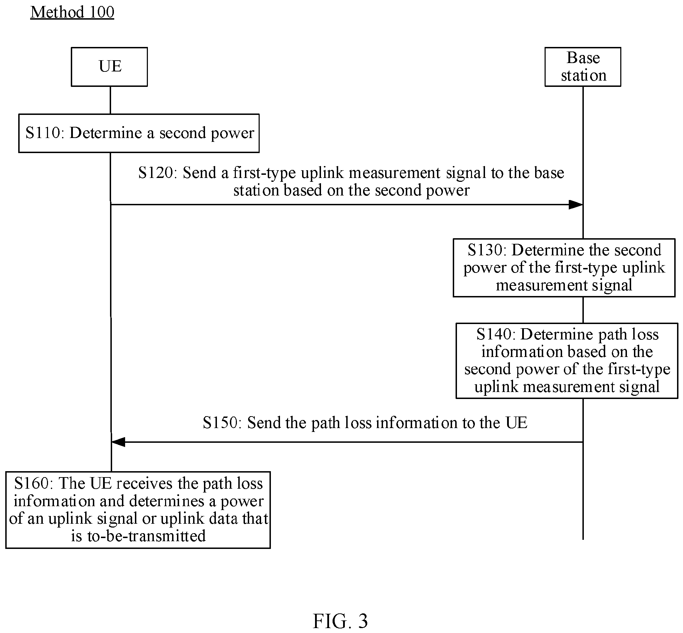

FIG. 3 is a schematic flowchart of a power control method 100 according to this application. The method includes steps S110 to S 160. The following describes each step in detail.

Step S110: UE determines a second power from at least one power based on a first power of a first-type uplink measurement signal (which is an example of a first reference signal).

It should be noted that in this embodiment of this application, there is a correspondence between the at least one power and at least one parameter. Herein, each power may have a correspondence with a group of parameters, or may have a correspondence with one parameter.

It should be noted that in this embodiment of this application, the first power may be a power obtained through calculation based on the foregoing power control parameter and according to the power control formula.

It should be noted that in this embodiment of this application, the first-type uplink measurement signal may also be extended to first uplink information. When the first reference signal is extended to the first uplink information, any one of a time-frequency resource of a reference signal, a sequence of a reference signal or an index that is included in the at least one parameter may be a reference signal carried in the first uplink information. Details are not described below again. By way of example, and not limitation, in a possible implementation, the UE may first obtain a mapping relationship. The mapping relationship in this embodiment of this application includes a mapping relationship between the at least one power and the at least one parameter. For example, the mapping relationship in this embodiment includes a mapping relationship between a power level and a time-frequency resource. Optionally, the time-frequency resource may alternatively be a time-frequency resource set. The mapping relationship may alternatively include a mapping relationship between a power level and a sequence, or may include both a mapping relationship between a power level and a time-frequency resource and a mapping relationship between a power level and a sequence. Optionally, the sequence may alternatively be a sequence set. In other words, the power level may correspond to at least one of the time-frequency resource or the sequence. When determining the power level, the UE sends an uplink measurement signal by using the corresponding time-frequency resource or sequence by default. The mapping relationship in this embodiment may further include a mapping relationship between a power level and an index. In other words, the power level corresponds to the index. When determining the power level, the UE also determines the corresponding index.

The UE may obtain the first power through calculation based on the foregoing power control parameter and according to the power control formula, and then determine, in the mapping relationship, the second power close to or the same as the first power.

It should be noted that the power control parameter may be sent by a base station to the UE.

It should be noted that the mapping relationship may be sent by the base station to the UE, or may be preconfigured on the UE. A manner in which the UE obtains the mapping relationship is not limited in this application. Details are not described below again.

It should be noted that the "power level" in this application may correspond to a specific power value or a power value range, or may be a specific power value or a power value range. This is applicable to any embodiment.

Step S120: The UE sends the first-type uplink measurement signal to the base station based on the second power.

By way of example, and not limitation, in a possible implementation, the UE may select, by using the second power, the corresponding time-frequency resource from the mapping relationship to send a first-type SRS. In a possible implementation, the UE may generate the first-type SRS based on the second power and the corresponding sequence in the mapping relationship. In a possible implementation, the UE may determine, based on the second power, the corresponding index in the mapping relationship, and send the first-type SRS and the corresponding index to the base station. The first-type SRS and the corresponding index may be sent to the base station in a same slot or in different slots. When in different slots, the corresponding index can indicate the associated first-type SRS.

Step S130: The base station receives the first-type uplink measurement signal, and determines the second power of the first-type uplink measurement signal.

By way of example, and not limitation, in a possible implementation, the base station may determine a second power of the first-type SRS based on received information about the first-type SRS and the mapping relationship.

Step S140: The base station determines path loss information based on the second power of the first-type uplink measurement signal.

The base station calculates a path loss value or a path loss adjustment value based on the second power of the first-type SRS. It should be noted that in this application, the path loss value or the path loss adjustment value determined by the base station is the path loss information. In other words, the path loss information includes the path loss value or the path loss adjustment value.

It should be understood that the path loss information may be an absolute value of the calculated path loss value, or may be an offset relative to a previously calculated path loss value.

Optionally, when there are a plurality of active carriers, the path loss information may be each path loss adjustment value of one or more path loss adjustment values of a plurality of active carriers relative to a reference active carrier. The path loss information may further be a path loss adjustment value on each active carrier relative to previously delivered path loss information.

Step S150: The base station sends the path loss information to the UE.

Optionally, when the path loss value changes or a path loss change exceeds a threshold, the base station sends the path loss information.

Optionally, the base station may include the path loss information in downlink control information. By way of example, and not limitation, a field indicating the path loss information may be added to the downlink control information. For example, the field of the path loss information may occupy a new field of reserved bit information, or a field of path loss adjustment information occupies extended K bits.

Step S160: The UE receives the path loss information sent by the base station, and determines a power of an uplink signal or uplink data that is to-be-transmitted.

When the path loss information is the path loss adjustment value, the UE obtains a new path loss value based on the path loss adjustment value, and determines, based on the new path loss value, the power of the uplink signal or the uplink data that is to-be-transmitted.

Specifically, the UE receives the path loss information sent by the base station. When the path loss information is the path loss adjustment value, the UE obtains a new path loss value based on the path loss adjustment value, and determines, based on the new path loss value, the power of the uplink signal or the uplink data that is to-be-transmitted.

Step S160 is an optional step.

According to the method in this embodiment, interference caused when the UE sends the first-type SRS on an active carrier may be reduced as much as possible, and it is ensured that a power value that corresponds to an SRS and that is used to determine the path loss information is accurate. In other words, accuracy of a calculated path loss value is improved, and therefore, power control is better implemented.

A method 200 is a power control method in a first specific embodiment of this application. The method includes steps 210 to 260. The following describes each step in detail.

Step S210: UE determines a second power of a first-type uplink measurement signal.

In a possible implementation, the UE may first obtain a mapping relationship #1.

As described above, a mapping relationship in this embodiment of this application includes a mapping relationship between at least one power and at least one parameter. For example, the mapping relationship #1 in this embodiment includes a mapping relationship between a power level and a time-frequency resource, may include a mapping relationship between a power level and a sequence, or may include both a mapping relationship between a power level and a time-frequency resource and a mapping relationship between a power level and a sequence.

For example, the mapping relationship #1 may be a mapping relationship between a power level #1 and a time-frequency resource #1, a mapping relationship between a power level #2 and a time-frequency resource #2, a mapping relationship between a power level #3 and a time-frequency resource #3, ..., and a mapping relationship between a power level #N and a time-frequency resource #N. Alternatively, the mapping relationship #1 may be a mapping relationship between a power level #1 and a sequence #1, a mapping relationship between a power level #2 and a sequence #2, a mapping relationship between a power level #3 and a sequence #3, ..., and a mapping relationship between a power level #N and a sequence #N. Optionally, the time-frequency resource may alternatively be a time-frequency resource set. Optionally, the sequence may alternatively be a sequence set.

It should be noted that in this embodiment of this application, setting of the power level in the mapping relationship #1 may include the following three cases.

Case 1:

When system resources are sufficient, each power level may correspond to a power actually calculated by the UE. To be specific, the time-frequency resource or the sequence that is in the mapping relationship #1 and that corresponds to the power level may indicate the power actually calculated by the UE. In other words, when the resources are sufficient, the UE may find, in the mapping relationship #1, a power level same as the power of the second-type SRS based on a power of a second-type SRS determined by a power control parameter and a power control formula, and determine a corresponding time-frequency resource or sequence. That is, in this case, the power level may be completely the same as the power of the second-type SRS actually calculated by the UE.

Case 2:

When system resources are insufficient, it is impossible that each power level corresponds to a corresponding time-frequency resource. In this case, power level division is limited. For example, adjacent power levels may be set based on a specific threshold. For example, a difference between the adjacent power levels may be 4 dBmw. In other words, in this case, the power level division is limited, and additional requirements for resources and sequences may be reduced. In this case, minimum interference and maximum-granularity power control may be implemented simultaneously.

Case 3:

It should be noted that when the UE performs sending at a radio frequency end, there is usually a deviation between an actual transmit power value and an expected transmit power value due to some hardware limitations. For example, when a power determined by the UE is smaller, an error is greater, and there is also a deviation in selecting a corresponding power level. Therefore, the power level mentioned in this embodiment may further meet the following two requirements:

(1) A corresponding minimum threshold is set when the power level is defined. In other words, the power level cannot be lower than the minimum threshold. For example, the minimum threshold may be 9 dBmw or 10 dBmw.
(2) In the mapping relationship of the power level, as the power level increases, a difference between two adjacent power levels should be greater. For example, a power level #1 may be 11 dBmw, a power level #2 may be 14 dBmw, a power level #3 may be 18 dBmw, and a power level #4 may be 23 dBmw.

Optionally, the foregoing power level may also meet: As the power level decreases, a difference between two adjacent power levels should be greater. For example, a power level #4 may be 11 dBmw, a power level #3 may be 14 dBmw, a power level #2 may be 18 dBmw, and a power level #1 may be 23 dBmw. The foregoing is merely an example, and does not constitute a limitation.
Through the foregoing setting of the power level, misdetermination of the power level value caused by inaccurate setting of a UE radio frequency (radio frequency, RF) may be avoided.
It should be understood that there may be N power levels in this case, and N is a positive integer greater than or equal to 3. Certainly, N may alternatively be 2, and in this case, there is no difference between power levels.
In other words, in this embodiment of this application, the "difference" may be an absolute value of a difference between two adjacent power levels, or may be a difference between an (N-1)th power level and an (N-2)th power level.
The UE may obtain a first power through calculation based on the power control parameter and the power control formula, and then determine, in the mapping relationship, the second power close to or the same as the first power.

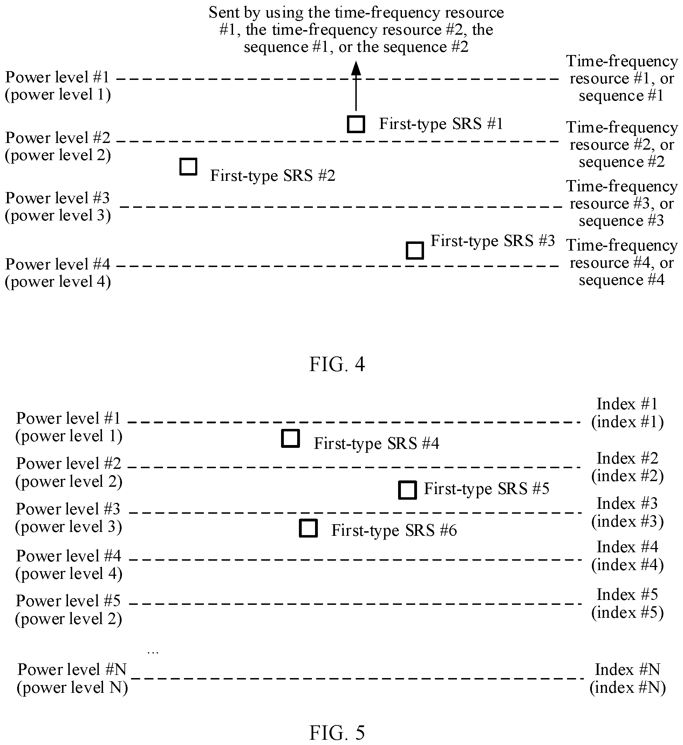

FIG. 4 shows a mapping relationship #1 configured by a base station, namely, a mapping relationship between a power level and a time-frequency resource or the sequence.
In a possible implementation, the UE may determine, in the mapping relationship, a power level close to the first power based on the calculated first power.
It should be noted that the power level in this application may also be understood as a specific power value. Therefore, determining the power level in this embodiment of this application may also be understood as determining a power (in other words, determining the second power). Details are not described below again.
It should be noted that selecting the power level close to the first power may include: selecting a power level corresponding to a minimum power greater than or equal to the power or selecting a power level corresponding to a maximum power less than or equal to the power. Further, a power level corresponding to a power with a minimum deviation from the power may be preferentially selected. The selecting a power level close to the first power may further include: selecting a power level corresponding to a power with a minimum deviation from the power.
The UE may determine a corresponding time-frequency resource or sequence based on the power level.
By way of example, and not limitation, a first-type SRS #1 in FIG. 4 is used as an example for description. It is assumed that a power of a power level #1 is 11 dBmw, a power of a power level #2 is 16 dBmw, a power of a power level #3 is 20 dBmw, and a power of a power level #4 is 23 dBmw. It is assumed that a power of the first-type SRS #1 determined by the UE in this embodiment is 13 dBmw, the UE may select the power level #2, and then select a time-frequency resource #2 or a sequence #2 based on the mapping relationship. Certainly, the UE may alternatively select the power level #1, and then select a time-frequency resource #1 or a sequence #1 based on the mapping relationship. In other words, the UE may select, based on a determined power of an uplink measurement signal, a power level closest to or second closest to the determined power of the uplink measurement signal, and then determine a corresponding parameter.

It should be understood that, when the UE has a multi-transmission capability, for example, the UE can support simultaneous sending on three radio frequency links, in this case, three first-type SRSs, for example, the first-type SRS #1, a first-type SRS #2, and a first-type SRS #3, may be simultaneously sent. The first-type SRS #1, the first-type SRS #2, and the first-type SRS #3 are located on different carriers, and may be sent based on corresponding configuration information of the corresponding carriers. It is assumed that in this embodiment, the power of the first-type SRS #1 determined by the UE is 13 dBmw, a power of the first-type SRS #2 determined by the UE is 17 dBmw, and a power of the first-type SRS #3 determined by the UE is 21 dBmw. Therefore, for the three first-type SRSs, the UE may respectively select the power level #1, the power level #2, and the power level #3, and then select, based on the mapping relationship, the time-frequency resource #1 or the sequence #1, the time-frequency resource #2 or the sequence #2, and a time-frequency resource #3 or a sequence #3, to separately send the three first-type SRSs in the corresponding configuration information of the corresponding carriers.

Step S220: The UE sends the first-type uplink measurement signal to the base station based on the second power.

It should be understood that in step S210, when the UE selects the time-frequency resource corresponding to the power level, the UE may upload the second-type SRS on the time-frequency resource. When information used by the network device to determine a corresponding transmit power is a sequence (sequence), the UE generates the second-type SRS by using the corresponding sequence. For example, the UE may generate the second-type SRS by using the corresponding sequence.

It should be understood that the UE may determine a power of a reference signal based on the power control parameter and the power control formula, to directly send the second-type SRS. Step S230: The base station receives the first-type uplink measurement signal, and determines the second power of the first-type uplink measurement signal.

By way of example, and not limitation, in a possible implementation, the base station may determine a second power of the first-type SRS based on received information about the first-type SRS and the mapping relationship.

Step S240: The base station determines path loss information based on the second power of the first-type uplink measurement signal.

The base station calculates a path loss value or a path loss adjustment value based on the second power of the first-type SRS. It should be noted that, in this application, the path loss value or the path loss adjustment value determined by the base station is the path loss information.

It should be understood that the path loss information may be an absolute value of the calculated path loss value, or may be an offset relative to a previously calculated path loss value.

Optionally, when there are a plurality of active carriers, the path loss information may be each path loss adjustment value of one or more path loss adjustment values of a plurality of active carriers relative to a reference active carrier. The path loss information may further be a path loss adjustment value on each active carrier relative to previously delivered path loss information.

Step S250: The base station sends the path loss information to the UE.

Optionally, when the path loss value changes or a path loss change exceeds a threshold, the base station sends the path loss information.

Optionally, the base station may include the path loss information in downlink control information. By way of example, and not limitation, a field indicating the path loss information may be added to the downlink control information. For example, the field of the path loss information may occupy a new field of reserved bit information, or a field of path loss adjustment information occupies extended K bits.

Step S260: The UE receives the path loss information sent by the base station, and determines a power of an uplink signal or uplink data that is to-be-transmitted.

When the path loss information is the path loss adjustment value, the UE obtains a new path loss value based on the path loss adjustment value, and determines, based on the new path loss value, the power of the uplink signal or the uplink data that is to-be-transmitted.

Specifically, the UE receives the path loss information sent by the base station. When the path loss information is the path loss adjustment value, the UE obtains a new path loss value based on the path loss adjustment value, and determines, based on the new path loss value, the power of the uplink signal or the uplink data that is to-be-transmitted.

Step S260 is an optional step.

According to the method in this embodiment, interference caused when the UE sends the first-type SRS on the active carrier may be reduced as much as possible, and it is ensured that a power value that corresponds to an SRS and that is used to determine the path loss is accurate. In other words, accuracy of the calculated path loss value is improved, and therefore, power control is better implemented. In addition, in this embodiment, the power level division may be limited, and additional requirements on time-frequency resources and sequences are reduced. In other words, in this embodiment, minimum interference and large-granularity power control may be implemented simultaneously.

A method 300 is a power control method in a second specific embodiment of this application. The method includes steps 310 to 360. The following describes each step in detail.

Step 310: UE determines a second power of a first-type uplink measurement signal.

In a possible implementation, the UE may first obtain a mapping relationship #2.

As described above, a mapping relationship in this embodiment of this application includes a mapping relationship between at least one power and at least one parameter. For example, a mapping relationship #1 in this embodiment includes a mapping relationship between a power level and an index. In other words, the power level corresponds to the index, and when the UE determines a corresponding power level, a corresponding index is also determined. In this application, the power level may correspond to a specific power value or a power value range, or may be a specific power value or a power value range. This is applicable to any embodiment. For example, the mapping relationship #2 may be a mapping relationship between a power level #1 and an index #1, a mapping relationship between a power level #2 and an index #2, a mapping relationship between a power level #3 and an index #3, ..., and a mapping relationship between a power level #N and an index #N. It should be understood that in this embodiment of this application, setting of the power level in the mapping relationship #1 may include the following three cases.

Case 1:

Each power level corresponds to a power actually calculated by the UE. In other words, the UE may find, in the mapping relationship #1, a power level same as the power of the second-type SRS based on a power of a second-type SRS determined by a power control parameter and a power control formula, and determine a corresponding index. That is, in this case, the power level may be completely the same as the power of the second-type SRS actually calculated by the UE.

Case 2:

Adjacent power levels may be set based on a specific threshold. For example, a difference between adjacent power levels may be 3 dBmw.

Case 3:

It should be noted that when the UE performs sending at a radio frequency end, there is usually a deviation between an actual transmit power value and an expected transmit power value due to some hardware limitations. For example, when a power determined by the UE is smaller, an error is greater, and there is also a deviation in selecting a corresponding power level. Therefore, the power level mentioned in this embodiment may further meet the following two requirements:

(1) A corresponding minimum threshold is set when the power level is defined. In other words, the power level cannot be lower than the minimum threshold. For example, the minimum threshold may be 9 dBmw or 10 dBmw.
(2) In the mapping relationship of the power level, as the power level decreases (where a corresponding power level value increases), a difference between two adjacent power levels should be greater. For example, a power level #1 may be 11 dBmw, a power level #2 may be 16 dBmw, a power level #3 may be 20 dBmw, and a power level #4 may be 23 dBmw.

Optionally, the foregoing power level may also meet: As the power level decreases (where a corresponding power level value decreases), a difference between two adjacent power levels should be greater. For example, a power level #4 may be 11 dBmw, a power level #3 may be 16 dBmw, a power level #2 may be 20 dBmw, and a power level #1 may be 23 dBmw. The foregoing is merely an example, and does not constitute a limitation.

It should be understood that there may be N power levels in this case, and N is a positive integer greater than or equal to 3. Certainly, N may alternatively be 2, and in this case, there is no difference between power levels.

In other words, in this embodiment of this application, the "difference" may be an absolute value of a difference between two adjacent power levels, or may be a difference between an $(N-1)^{th}$ power level and an $(N-2)^{th}$ power level.

Through the foregoing setting of the power level, misdetermination of the power level value caused by inaccurate setting of a UE radio frequency (radio frequency, RF) may be avoided.

In this example of this application, power level division is more refined, in other words, there is no upper limit for the power level division. This may ensure that a power calculated based on the power control formula is approximate to the actual transmit power, and minimum interference and minimum-granularity power control may be implemented simultaneously.

It should be noted that selecting a power level close to the power actually calculated by the UE may include: selecting a power level corresponding to a minimum power greater than or equal to the power or selecting a power level corresponding to a maximum power less than or equal to the power. Further, a power level corresponding to a power with a minimum deviation from the power may be preferentially selected. The selecting a power level close to the power actually calculated by the UE may further include: selecting a power level corresponding to a power with a minimum deviation from the power.

FIG. 5 shows a mapping relationship #2 configured by a base station, namely, a mapping relationship between a power level and an index.

In a possible implementation, the UE may obtain the first power through calculation based on the power control parameter and the power control formula, and then determine, in the mapping relationship, a power level close to the first power.

It should be noted that selecting the power level close to the first power may include: selecting a power level corresponding to a minimum power greater than or equal to the power or selecting a power level corresponding to a maximum power less than or equal to the power. Further, a power level corresponding to a power with a minimum deviation from the power may be preferentially selected. The selecting a power level close to the first power may further include: selecting a power level corresponding to a power with a minimum deviation from the power.

The UE may determine a corresponding index based on the power level.

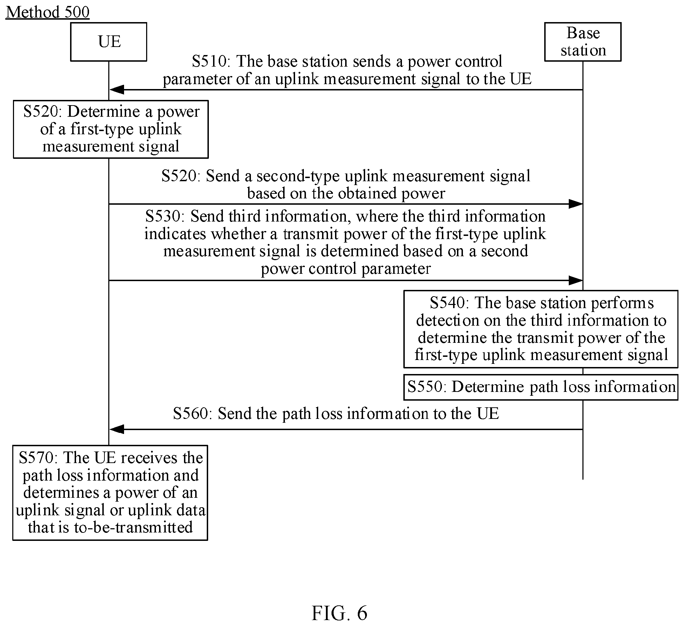

By way of example, and not limitation, a first-type SRS #5 in FIG. 6 is used as an example for description. It is assumed that a power of a power level #1 is 11 dBmw, a power of a power level #2 is 16 dBmw, a power of a power level #3 is 20 dBmw, and a power of a power level #4 is 23 dBmw. It is assumed that a power of the first-type SRS #5 is 17 dBmw. The UE may select the power level #3, and then determine an index #3 corresponding to the power level #3 based on the mapping relationship. Certainly, the UE may alternatively select the power level #2, and then determine an index #2 corresponding to the power level #2 based on the mapping relationship. In other words, the UE may select, based on a determined power of an uplink measurement signal, a power level closest to or second closest to the determined power of the uplink measurement signal, and then determine the index corresponding to the power level.

It should be understood that when the UE has a multi-transmission capability, for example, the UE can support simultaneous sending on three radio frequency links, in this case, three first-type SRSs, for example, the first-type SRS #4, a first-type SRS #5, and a first-type SRS #6, may be simultaneously sent. The first-type SRS #4, the first-type SRS #5, and the first-type SRS #6 are located on different carriers, and may be sent by the UE based on corresponding configuration information of the corresponding carriers. It is assumed that in this embodiment, the power of the first-type SRS #3 determined by the UE is 13 dBmw, a power of the first-type SRS #4 determined by the UE is 16 dBmw, and a power of the first-type SRS #5 determined by the UE is 17 dBmw. Therefore, for the three first-type SRSs, the UE may respectively select the power level #1, the power level #2, and the power level #3, and then, based on the mapping relationship, determine the index #1, and select the index #2 and the index #3.

Step S320: The UE sends the first-type uplink measurement signal to the base station based on the second power.

It should be understood that in step S310, when the UE determines the power level, the index corresponding to the power level is also determined. In a possible implementation, the UE may send the first-type uplink measurement signal to the base station, and send first information to the base station. The first information may indicate the index corresponding to the power level.

It should be understood that the UE may determine a power of a reference signal based on the power control parameter and the power control formula, to directly send the second-type SRS. Step S330: The base station receives the first-type uplink measurement signal and the first information, and determines the second power of the first-type uplink measurement signal.

By way of example, and not limitation, in a possible implementation, the base station may determine a second power of the first-type SRS based on the received first information and the mapping relationship.

Step S340: The base station determines path loss information based on the second power of the first-type uplink measurement signal.

The base station calculates a path loss value or a path loss adjustment value based on the second power of the first-type SRS. It should be noted that, in this application, the path loss value or the path loss adjustment value determined by the base station is the path loss information.

It should be understood that the path loss information may be an absolute value of the calculated path loss value, or may be an offset relative to a previously calculated path loss value.

Optionally, when there are a plurality of active carriers, the path loss information may be each path loss adjustment value of one or more path loss adjustment values of a plurality of active carriers relative to a reference active carrier. The path loss information may further be a path loss adjustment value on each active carrier relative to previously delivered path loss information.

Step S350: The base station sends the path loss information to the UE.

Optionally, when the path loss value changes or a path loss change exceeds a threshold, the base station sends the path loss information.

Optionally, the base station may include the path loss information in downlink control information. By way of example, and not limitation, a field indicating the path loss information may be added to the downlink control information. For example, the field of the path loss information may occupy a new field of reserved bit information, or a field of path loss adjustment information occupies extended K bits.

Step S360: The UE receives the path loss information sent by the base station, and determines a power of an uplink signal or uplink data that is to-be-transmitted.

When the path loss information is the path loss adjustment value, the UE obtains a new path loss value based on the path loss adjustment value, and determines, based on the new path loss value, the power of the uplink signal or the uplink data that is to-be-transmitted.

Specifically, the UE receives the path loss information sent by the base station. When the path loss information is the path loss adjustment value, the UE obtains a new path loss value based on the path loss adjustment value, and determines, based on the new path loss value, the power of the uplink signal or the uplink data that is to-be-transmitted.

According to the method in this embodiment, interference caused when the UE sends the first-type SRS on an active carrier may be reduced as much as possible, and it is ensured that a power value that corresponds to an SRS and that is used to determine the path loss information is accurate. In other words, accuracy of a calculated path loss value is improved, and therefore, power control is better implemented. In addition, in this embodiment of this application, the power level and the index may be more refined. In other words, in this embodiment, minimum interference and minimum-granularity power control may be implemented simultaneously.

A method 400 is a power control method in a third specific embodiment of this application. The method includes steps 410 to 460. The following describes each step in detail.

Step S410: UE determines a second power of a first-type uplink measurement signal.

In a possible implementation, the UE may first obtain a mapping relationship based on the method 200 or the method 300 in the foregoing embodiments, and determine a power level of the first-type uplink measurement signal and a corresponding parameter. For a specific process, refer to step 210 in the method 200 or step 310 in the method 300. Details are not described again.

At the same time, the UE may also obtain second information, and the second information may include or indicate a time-frequency resource of the first-type uplink measurement signal. For example, the UE may receive the second information from a base station.

It should be noted that there is no sequence for obtaining the mapping relationship and obtaining the second information by the UE.

As an example, the UE may receive second information of an uplink measurement signal from the base station. The second information may be understood as configuration information of the uplink measurement signal, and includes at least one of the following: a type of the uplink measurement signal on an active carrier and a location at which the UE sends two types of uplink measurement signals. The location at which the UE sends the two types of uplink measurement signals may also be understood as one or a combination of time domain location information, frequency domain location information, or spatial domain location information of the first-type uplink measurement signal.

Configuration information of the first-type uplink measurement signal is different from configuration information of a second-type uplink measurement signal. The configuration information of the first-type uplink measurement signal is sent by the base station to the UE. Optionally, the configuration information of the first-type uplink measurement signal and the configuration information of the second-type uplink measurement signal may be delivered in one piece of signaling.

The base station may send the second information to the UE in the following two manners.

Manner 1:

In an implementation, the second information may include that last one or Z symbols of every X uplink measurement signal is/are the uplink measurement signals used for path loss information measurement. In other words, the last one or Z symbols of the X uplink measurement signals are determined to send a first-type SRS.

In other words, the base station may specify symbols on which the UE sends the first-type SRS and symbols on which the UE sends a second-type SRS in the uplink measurement signal.

For example, the base station may specify that the UE sends the first-type SRS on a last symbol of each uplink measurement signal, and sends the second-type SRS on another symbol of the uplink measurement signal. Alternatively, the base station sends the first-type SRS on the last three symbols of an 11th uplink measurement signal at an interval of 10 uplink measurement signals, and sends the second-type SRS on another symbol.

In another implementation, the second information may include that last one or Z symbols of every Y PUSCHs is/are the uplink measurement signals used to determine the path loss information. In other words, the last one or Z symbols of the Y PUSCHs is/are determined to send the second-type SRS.

In other words, the base station may also specify, in any uplink data sent by the UE, symbols on which the second-type SRS is sent.

For example, the base station may specify that the UE sends the second-type SRS on the last symbol of each PUSCH, and sends the first-type SRS on another symbol of the PUSCH. Alternatively, the base station sends the second-type SRS on the last two symbols of the third PUSCH at an interval of two PUSCHs, and sends the first-type SRS on another symbol.

It should be understood that in Manner 1, the base station may send the second information to the UE periodically or aperiodically.

Manner 2:

Optionally, the second information may further include sending trigger information of two types of uplink measurement signals. In other words, the second information indicates a terminal device to send the two types of uplink measurement signals. As an example, the base station may send the second information (for example, downlink control information) to the UE. The second information includes the trigger information of two types of uplink measurement signals. In other words, the UE may determine, based on the second information, which type of SRS is triggered by the base station, and then separately send two types of SRSs at different locations based on different types of SRSs. The second information may include a trigger bit (bit) of a first-type SRS and a trigger bit of a second-type SRS. In other words, the UE may determine a sending moment and/or a sending location of the first-type SRS and a sending moment and/or a sending location of the second-type SRS based on the second information.

In an implementation, the trigger bit of the first-type SRS and the trigger bit of the second-type SRS may be sorted in sequence. For example, the trigger bit of the first-type SRS is in front of the trigger bit of the second-type SRS. In another implementation, the trigger bit of the first-type SRS and the trigger bit of the second-type SRS may be in one piece of downlink control information, but occupy different corresponding fields, so that the UE can identify or determine to which type of SRS the trigger bit belongs to.

Optionally, the second information includes sending trigger information of the first-type uplink measurement signal. In other words, the second information indicates the terminal device to send the first-type uplink measurement signal. It may be understood that the second information does not include sending trigger information of the second-type uplink measurement signal, and includes only the sending trigger information of the first-type uplink measurement signal. In other words, the UE may determine, based on the second information, that the base station triggers the first-type SRS, and then send the first-type SRS at a corresponding location. The second information may include the trigger bit of the first-type SRS. In other words, the UE may determine the sending moment and/or the sending location of the first-type SRS based on the second information.

The UE may determine, by using a radio network temporary identifier (radio network temporary identifier, RNTI) corresponding to the second information, that the base station triggers the first-type SRS in the second information. In other words, the base station configures the corresponding RNTI for the second information (for example, the downlink control information) including the trigger bit of the first-type SRS.

It should be understood that sending trigger information included in the second information in Manner 2 may be semi-persistent (semi-persistent, SPS) sending, or may be one-shot (one-shot) sending.

Step S420: The UE sends the first-type uplink measurement signal to the base station based on the second power.

In a possible implementation, the UE may determine, based on the second information, that a moment is the sending moment of the first-type SRS configured by the base station, generate the first-type SRS based on the sequence that is determined in step S410 and that corresponds to the power level, and send the first-type SRS on a symbol configured by the base station.

In another possible implementation, for example, in step S410, the UE determines an index corresponding to the power level. In this case, the UE may also determine, based on first information, that the moment is the sending moment of the first-type SRS configured by the base station, and send the first-type SRS on the symbol configured by the base station.

In other words, the method 200 or the method 300 in the foregoing embodiments may be used in combination with this embodiment. In other words, it may be determined, according to this embodiment, that a to-be-sent uplink measurement signal is the first-type SRS or the second-type SRS, and then corresponding implementation is performed with reference to the method 200 or the method 300 in the foregoing embodiments.

It should be understood that when used in combination, there is no limitation on a sequence between the two steps of determining, by the UE, the second power of the first-type uplink measurement signal and receiving, by the UE, the second information sent by the base station.

It should be noted that in the method 200 in the foregoing embodiment, when the UE determines, in the mapping relationship, to send the first-type SRS by using a time-frequency resource corresponding to the power level, the UE may also directly send the first-type uplink measurement signal by using the corresponding time-frequency resource, and this embodiment may not be combined.

Step S430: The base station receives the first-type uplink measurement signal and/or the first information, and determines the second power of the first-type uplink measurement signal.

In a possible implementation, the base station may determine a second power of the first-type SRS based on received information about the first-type SRS and the mapping relationship.

In a possible implementation, the base station may determine the second power of the first-type SRS based on the received first information and the mapping relationship.

Step S440: The base station determines path loss information based on the second power of the first-type uplink measurement signal.

The base station calculates a path loss value or a path loss adjustment value based on the second power of the first-type SRS. It should be noted that in this application, the path loss value or the path loss adjustment value determined by the base station is the path loss information.

It should be understood that the path loss information may be an absolute value of the calculated path loss value, or may be an offset relative to a previously calculated path loss value.

Optionally, when there are a plurality of active carriers, the path loss information may be each path loss adjustment value of one or more path loss adjustment values of a plurality of active carriers relative to a reference active carrier. The path loss information may further be a path loss adjustment value on each active carrier relative to previously delivered path loss information.

Step S450: The base station sends the path loss information to the UE.

Optionally, when the path loss value changes or a path loss change exceeds a threshold, the base station sends the path loss information.

Optionally, the base station may include the path loss information in downlink control information. By way of example, and not limitation, a field indicating the path loss information may be added to the downlink control information. For example, the field of the path loss information may occupy a new field of reserved bit information, or a field of path loss adjustment information occupies extended K bits.

Step S460: The UE receives the path loss information sent by the base station, and determines a power of an uplink signal or uplink data that is to-be-transmitted.

When the path loss information is the path loss adjustment value, the UE obtains a new path loss value based on the path loss adjustment value, and determines, based on the new path loss value, the power of the uplink signal or the uplink data that is to-be-transmitted.

Specifically, the UE receives the path loss information sent by the base station. When the path loss information is the path loss adjustment value, the UE obtains a new path loss value based on the path loss adjustment value, and determines, based on the new path loss value, the power of the uplink signal or the uplink data that is to-be-transmitted.

According to the method in this embodiment, the UE can determine a type of a sent uplink measurement signal, and perform corresponding power control. In addition, interference caused when the UE sends the first-type SRS on an active carrier may be reduced as much as possible, and it is ensured that a power value that corresponds to an SRS and that is used to determine the path loss is accurate. In other words, accuracy of a calculated path loss value is improved, and therefore, power control is better implemented.

FIG. 6 is a schematic flowchart of a power control method 500 according to a fourth specific embodiment of this application. In this embodiment, a base station sends a power control parameter of an SRS to UE. The UE sends third information to the base station. The third information indicates whether a transmit power of a first-type SRS is determined based on the power control parameter. The base station determines, by performing detection on the third information, a power value used by the UE to send the SRS, to determine path loss information. According to the method in this embodiment, interference caused when the UE sends the first-type SRS on an active carrier may be reduced as much as possible, and it is ensured that a power value that corresponds to an SRS and that is used to determine a path loss is accurate. In this way, accuracy of a calculated path loss value is improved, and therefore, power control may be better implemented. The method includes steps 510 to 570. The following describes each step in detail. Step S510: The base station sends a power control parameter of an uplink measurement signal to the UE.

Specifically, the power control parameter of the SRS may include an open-loop power control parameter and/or a closed-loop power control parameter, for example, the closed-loop power control parameter, a target power value, or a path loss compensation factor.

It should be noted that signaling carrying the power control parameter may include RRC signaling or DCI signaling. The target power value, the compensation factor, and the like are carried in the RRC signaling, and the closed-loop power control parameter is carried in the DCI signaling.

By way of example, and not limitation, the base station may periodically send downlink control information to the UE. The downlink control information includes the power control parameter of the SRS.

It should be noted that this embodiment may also be combined with the method 400. To be specific, the base station may also send second information to the UE. The second information may include or indicate a time-frequency resource of a first-type uplink measurement signal.

Step S520: The UE receives the power control parameter, determines a power of the first-type uplink measurement signal (which is an example of a third power), and

sends a second-type uplink measurement signal to the base station based on the third power. Specifically, the UE may determine, based on the power control parameter and a power control formula, a power for sending the first-type SRS, and then send the second-type uplink measurement signal to the base station based on a calculated power value.

It should be noted that when the base station sends the second information to the UE, the UE may also receive the second information.

Step S530: The UE sends the third information to the base station. The third information may indicate whether a transmit power of the power of the first-type uplink measurement signal is determined based on a power control parameter (which is an example of a second power control parameter) previously delivered by the base station.

It should be noted that there is no limitation on a sequence between step 520 and step 530 in this embodiment of this application.

It should be noted that if the UE receives the second information, in this embodiment, the UE may also send the first-type SRS based on a transmission location of the first-type SRS indicated by the second information. At the same time, the UE may also send the third information to the base station. It should be noted that there is no limitation on a sequence between two steps of sending, by the UE, the first-type SRS based on the second information and sending, by the UE, the third information.

It should be understood that the power control parameter is configured to determine the transmit power of the first-type SRS. That the power control parameter is configured to determine the transmit power of the first-type SRS may alternatively be understood as that the power control parameter is configured to determine a transmit power of a reference signal.

In some embodiments, the third information may further indicate whether the power control parameter is successfully received. It should be noted that successful reception by the UE includes: The UE detects DCI (or another message) that is sent by the base station and that carries the power control parameter, and demodulates the power control parameter. Unsuccessful reception includes: The UE detects no DCI (or another message) that is sent by the base station and that carries the power control parameter, or that the UE detects DCI (or another message) that is sent by the base station and that carries the power control parameter but fails to demodulate the power control parameter.

It should be understood that "successful reception" in this embodiment may also be understood as correct reception.

In an implementation, the third information may include feedback information, and the feedback information indicates whether the power control parameter delivered by the base station is successfully received by the UE. For example, whether the closed-loop power control parameter, the target power value, or the path loss compensation factor is correctly received by the UE.

Specifically, for the first-type SRS, the UE may send the third information (for example, uplink control information). The third information includes ACK or NACK feedback information, and indicates whether the UE correctly receives the power control parameter sent by the base station. The following two manners may be included.

Manner 1:

In an implementation, the UE may send the uplink control information once at an interval of a periodicity T. The uplink control information includes whether a power control parameter of each slot in a past periodicity is correctly received. T is a sending periodicity of the first-type SRS. Optionally, the periodicity T may be a time interval/periodicity at which the first-type SRS is sent in the first-type SRS and a second-type SRS. Optionally, the periodicity may alternatively be a time interval/periodicity at which the first-type SRS is sent in a PUSCH and the first-type SRS.

When a bit in a bitmap (bitmap) is set to 1, it indicates that a power control parameter delivered in a slot (slot) is correctly received by the UE. In other words, the UE calculates a corresponding power based on the power control parameter configured by the base station, and sends the first-type SRS by using the power. For example, the UE calculates, based on the power control parameter sent by the base station, a power for sending the uplink measurement signal. When the bit in the bitmap is set to 0, it indicates that the power control parameter delivered in a slot is not correctly received by the UE. In other words, the power control parameter delivered by the base station in the slot is not correctly received by the UE. In other words, a power for sending the uplink measurement signal by the UE at this time is still calculated based on a value of the power control parameter that is sent by the base station and that is correctly received at a latest time.

In an example, the base station periodically sends the downlink control information to the UE. The UE successfully receives the downlink control information sent by the base station, and correctly demodulates the downlink control information to obtain the power control parameter, for example, the closed-loop power control parameter, the target power value, or the compensation factor. In this case, the UE may calculate the power of the first-type uplink measurement signal based on the power control parameter and the power control formula, and determine the power for sending the uplink measurement signal, namely, the power for sending the first-type SRS. The UE may send the uplink control information to the base station, and the uplink control information carries the acknowledgment ACK or negative acknowledgment NACK feedback information. The base station may determine, by performing detection on the uplink control information, the transmit power of the uplink measurement signal, namely, the transmit power of the first-type SRS.

When the UE fails to receive the downlink control information sent by the base station, in other words, the UE detects no DCI (or another message) carrying the power control parameter, or the UE detects the DCI (or another message) carrying the power control parameter but fails to demodulate the power control parameter, the UE calculates the power for sending the first-type SRS at this time based on the value of the power control parameter that is sent by the base station and that is correctly received at the latest time, and adds the NACK feedback information to UCI. The base station determines, by performing detection on uplink control information #2, that the transmit power of the uplink measurement signal at this time is not calculated based on the power parameter sent by the base station. In this case, the base station determines the power parameter sent at a latest time when the bit in the bitmap is set to 1 as the first-type SRS. In other words, when detecting that the UE fails to receive or demodulate sent DCI in a slot, the base station determines the power control parameter sent at the latest time when the bit in the bitmap is set to 1 as the power for sending the first-type SRS by the UE at this time.

Manner 2:

In another implementation, each time after receiving the power control parameter, the UE may perform, in an earliest slot that meets an uplink feedback delay, ACK or NACK on a previously received power control parameter. The uplink feedback delay is minimum processing time from a moment at which the UE receives downlink control information #4 to a moment at which the UE can send uplink control information #2. The processing time includes receiving and demodulation time of the UE and uplink data preparation time.

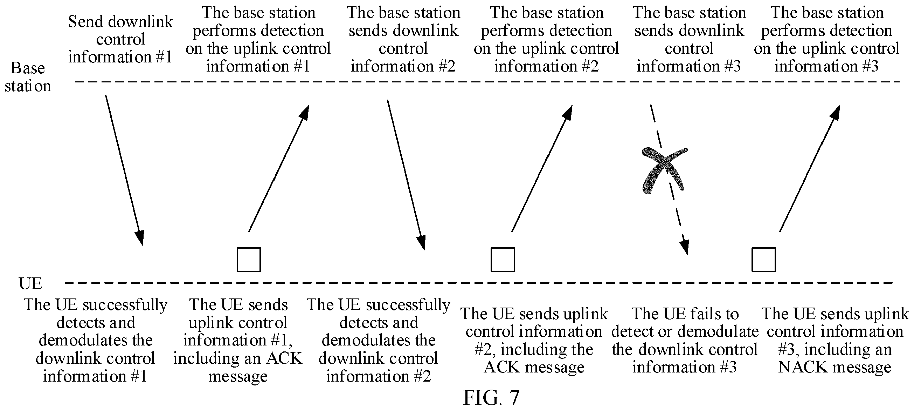

In an example, in FIG. 7, the UE correctly receives and successfully demodulates DCI sent by the base station at first two times. In this case, UCI carries the ACK information. However, the UE fails to receive and demodulate DCI sent by the base station at the third time. In this case, the UCI carries the NACK information. Alternatively, the UE detects no DCI sent by the base station at the third time. In this case, the UE does not send the UCI.

It should be noted that the power control parameter in this embodiment may be a power control parameter in at least one time unit in a time period.

It should be understood that the time unit may be a slot, a subframe, a mini slot, a mini subframe, or the like.

For example, if a periodicity value of a reference signal used for path loss measurement is 10 ms, and each slot is 1 ms, a bit of a bitmap is 10. Each bit indicates whether the power control parameter is received in each of 10 slots in the 10 ms periodicity, or whether the DCI including the power control parameter is received.

In some other embodiments, the third information further indicates that the transmit power of the first-type SRS is not determined based on the power control parameter. To be specific, in this case, when detecting that the UE fails to receive or demodulate the sent power control parameter in a slot, the base station determines the power control parameter sent at a latest time when the bit in the bitmap is set to 1 as the power for sending the first-type SRS by the UE at this time.

Step S540: The base station performs detection on the third information to determine a transmit power of the first-type uplink measurement signal.

Specifically, the base station detects the third information to determine a transmit power value of the first-type SRS sent by the UE.

The UE reports the third information once at the interval of the periodicity T, and the third information includes indication of TPC in each slot (slot) in a past periodicity. By way of example, and not limitation, for example, the UE reports the UCI once at an interval of five slots (slots), and it is assumed that the bitmap is: 1, 1, 1, 0, 0. In other words, the UE fails to receive power control parameters sent by the base station to the UE in last two slots. In this case, power for sending the uplink reference signals, namely, the power for sending the first-type SRS, by the UE in the 4th slot and the 5th slot is still calculated based on a power control parameter sent by the base station to the UE in the 3rd slot. When detecting the third information, the base station may determine that the UE sends the first-type SRS based on the power calculated based on a power parameter sent by the base station to the UE at the third time.

It should be understood that the path loss information may be an absolute value of a calculated path loss value, or may be an offset relative to a previously calculated path loss value.

Step S550: The base station determines the path loss information based on a transmit power of the second-type uplink measurement signal.

The base station calculates a path loss value or a path loss adjustment value based on a third power of the first-type SRS. It should be noted that in this application, the path loss value or the path loss adjustment value determined by the base station is the path loss information.

It should be understood that the path loss information may be the absolute value of the calculated path loss value, or may be the offset relative to the previously calculated path loss value.

Optionally, when there are a plurality of active carriers, the path loss information may be each path loss adjustment value of one or more path loss adjustment values of a plurality of active carriers relative to a reference active carrier. The path loss information may further be a path loss adjustment value on each active carrier relative to previously delivered path loss information.

Step S560: The base station sends the path loss information to the UE.

Optionally, when the path loss value changes or a path loss change exceeds a threshold, the base station sends the path loss information.

Optionally, the base station may include the path loss information in the downlink control information. By way of example, and not limitation, a field indicating the path loss information may be added to the downlink control information. For example, the field of the path loss information may occupy a new field of reserved bit information, or a field of path loss adjustment information occupies extended K bits.

Step S570: The UE receives the path loss adjustment information sent by the base station, and determines a power of an uplink signal or uplink data that is to-be-transmitted.

When the path loss information is the path loss adjustment value, the UE obtains a new path loss value based on the path loss adjustment value, and determines, based on the new path loss value, the power of the uplink signal or the uplink data that is to-be-transmitted.

Specifically, the UE receives the path loss adjustment information sent by the base station, and may determine, based on the new path loss, the power of the uplink signal or the uplink data that is to-be-transmitted.

According to the method in this embodiment, the UE sends the third information to the base station. The third information indicates whether the transmit power of the first-type SRS is determined based on the power control parameter. The base station determines, by performing detection on the third information, a power value for sending the SRS by the UE, to determine the path loss information. In this way, interference caused when the UE sends the first-type SRS on the active carrier may be reduced as much as possible, and it is ensured that a power value that corresponds to the SRS and that is used to determine the path loss is accurate. The accuracy of the calculated path loss value is improved, and therefore, power control is better implemented.

It should be understood that sequence numbers of the processes do not mean execution sequences in various embodiments of this application. The execution sequences of the processes should be determined based on functions and internal logic of the processes, and should not be construed as any limitation on implementation processes of embodiments of this application.

It should be understood that embodiments described in this application may be independent solutions, or may be combined based on internal logic. These solutions all fall within the protection scope of this application.

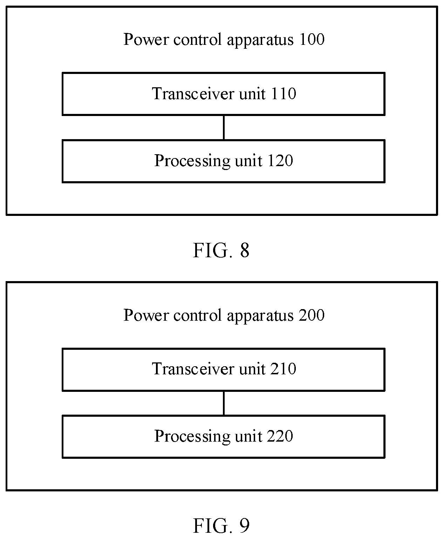

The power control method provided in embodiments of this application is described above in detail with reference to FIG. 3 to FIG. 7. The power control apparatus provided in embodiments of this application is described below in detail with reference to FIG. 8 to FIG. 9. It should be understood that descriptions of apparatus embodiments correspond to the descriptions of the method embodiments. Therefore, for content that is not described in detail, refer to the foregoing method embodiments. For brevity, some content is not described again.

FIG. 8 is a schematic block diagram of a power control apparatus 100 according to an embodiment of this application. As shown in the figure, the power control apparatus 100 may include a transceiver unit 110 and a processing unit 120.

It should be understood that the power control apparatus 100 may correspond to the terminal device (for example, user equipment) in the method 100, the method 200, the method 300, the method 400, and the method 500 according to embodiments of this application. The power control apparatus 100 may include units configured to perform the methods performed by the terminal device in the method 100, the method 200, the method 300, the method 400, and the method 500. In addition, the units in the power control apparatus 100 and the foregoing other operations and/or functions are respectively used to implement corresponding procedures in the method 100, the method 200, the method 300, the method 400, and the method 500. It should be understood that a specific process in which the units perform the foregoing corresponding steps is described in detail in the foregoing method embodiments, and for brevity, details are not described herein.

In embodiments of this application, the apparatus 100 may include a processor and a transceiver. The processor is connected to the transceiver. Optionally, the device further includes a memory, and the memory is connected to the processor. Further, optionally, the device includes a bus system. The processor, the memory, and the transceiver may be connected by using the bus system. The memory may be configured to store instructions. The processor is configured to execute the instructions stored in the memory, to control the transceiver to send information or a signal.

The processing unit in the apparatus 100 shown in FIG. 8 may correspond to the processor, and the transceiver unit in the apparatus 100 shown in FIG. 8 may correspond to the transceiver.

FIG. 9 is a schematic block diagram of a power control apparatus 200 according to an embodiment of this application. As shown in the figure, the power control apparatus 200 may include a transceiver unit 210 and a processing unit 220.

It should be understood that the power control apparatus 200 may correspond to the network device (for example, a base station) in the method 100, the method 200, the method 300, the method 400, and the method 500 according to embodiments of this application. The power control apparatus 200 may include units configured to perform the methods performed by the network device in the method 100, the method 200, the method 300, the method 400, and the method 500. In addition, the units in the power control apparatus 200 and the foregoing other operations and/or functions are respectively used to implement corresponding procedures in the method 100, the method 200, the method 300, the method 400, and the method 500. It should be understood that a specific process in which the units perform the foregoing corresponding steps is described in detail in the foregoing method embodiments, and for brevity, details are not described herein.

In embodiments of this application, the apparatus 200 may include a processor and a transceiver. The processor is connected to the transceiver. Optionally, the device further includes a memory, and the memory is connected to the processor. Further, optionally, the device includes a bus system. The processor, the memory, and the transceiver may be connected by using the bus system. The memory may be configured to store instructions. The processor is configured to execute the instructions stored in the memory, to control the transceiver to send information or a signal.

The processing unit in the apparatus 200 shown in FIG. 9 may correspond to the processor, and the transceiver unit in the apparatus 500 shown in FIG. 9 may correspond to the transceiver.

According to the methods provided in embodiments of this application, this application further provides a computer program product. The computer program product includes computer program code. When the computer program code is run on a computer, the computer is enabled to perform any one of the method 100, the method 200, the method 300, the method 400, and the method 500. According to the methods provided in embodiments of this application, this application further provides a computer-readable medium. The computer-readable medium stores program code. When the program code is run on a computer, the computer is enabled to perform any one of the method 100, the method 200, the method 300, the method 400, and the method 500.

According to the methods provided in embodiments of this application, this application further provides a chip, including at least one processor and a communication interface. The communication interface is configured to receive a signal from another power control apparatus other than a power control apparatus, and transmit the signal to the processor, or send a signal from the processor to the another power control apparatus other than the power control apparatus. The processor is configured to implement any one of the method 100, the method 200, the method 300, the method 400, and the method 500 by using a logic circuit or by executing code instructions. According to the methods provided in embodiments of this application, this application further provides a system, including the foregoing apparatus or devices.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. The components may perform communication by using a local process and/or a remote process and based on, for example, a signal with one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or a part of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A power control method, comprising:

   determining a second power from at least one power based on a first power of a first reference signal, wherein there is a correspondence between the at least one power and at least one parameter; and
   sending the first reference signal based on the second power.

2. The method according to claim 1, wherein the at least one parameter comprises at least one of the following:
   a time-frequency resource of a reference signal, a sequence of a reference signal, or an index of a power.

3. The method according to claim 1 or 2, wherein the at least one parameter is the time-frequency resource of the reference signal; and
   the sending the first reference signal based on the second power comprises:
   sending, based on the second power, the first reference signal on a time-frequency resource corresponding to the second power.

4. The method according to any one of claims 1 to 3, wherein the at least one parameter is the sequence of the reference signal; and
   the method further comprises:
   generating the first reference signal based on a sequence corresponding to the second power.

5. The method according to any one of claims 1 to 4, wherein the at least one parameter is the index of the power; and
   the method further comprises:
   sending first information to a network device, wherein the first information comprises or indicates an index corresponding to the second power.

6. The method according to any one of claims 1 to 5, wherein the first power is a power determined based on a first power control parameter.

7. The method according to any one of claims 1 to 6, wherein

   the second power is a minimum power of one or more powers that are greater than or equal to the first power and that are of the at least one power;

the second power is a maximum power of one or more powers that are less than or equal to the first power and that are of the at least one power; or
the second power is a power that has a smallest deviation from the first power and that is of the at least one power.

8. The method according to any one of claims 1 to 7, wherein in the at least one power, smaller two adjacent powers in power magnitude indicate a greater difference between the two powers.

9. The method according to any one of claims 1 to 8, wherein the method further comprises:
receiving second information, wherein the second information indicates a time-frequency resource of the first reference signal.

10. The method according to claim 9, wherein the second information further indicates a terminal device to send the first reference signal.

11. The method according to claim 10, wherein the second information comprises a bit indicating the terminal device to send the first reference signal; or the second information comprises a bit indicating the terminal device to send the first reference signal and a bit indicating the terminal device to send a second reference signal.

12. A power control method, comprising:

receiving a first reference signal; and
determining a second power of the first reference signal, wherein the second power is one of at least one power, and there is a correspondence between the at least one power and at least one parameter.

13. The method according to claim 12, wherein the at least one parameter comprises at least one of the following:
a time-frequency resource of a reference signal, a sequence of a reference signal, or an index of a power.

14. The method according to claim 12 or 13, wherein the at least one parameter is the time-frequency resource of the reference signal; and
the determining a second power of the first reference signal comprises:
determining a power corresponding to a time-frequency resource of the first reference signal as the second power.

15. The method according to any one of claims 12 to 14, wherein the at least one parameter is the sequence of the reference signal; and
the method further comprises:
determining a power corresponding to a sequence of the first reference signal as the second power.

16. The method according to any one of claims 12 to 15, wherein the at least one parameter is the index of the power; the method further comprises:

receiving first information from a terminal device, wherein the first information comprises or indicates an index corresponding to the second power; and
the determining a second power of the first reference signal comprises:
determining the second power based on the index.

17. The method according to any one of claims 12 to 16, wherein

the second power is a minimum power of one or more powers that are greater than or equal to a first power and that are of the at least one power;
the second power is a maximum power of one or more powers that are less than or equal to the first power and that are of the at least one power; or
the second power is a power that has a smallest deviation from the first power and that is of the at least one power.

18. The method according to any one of claims 12 to 17, wherein in the at least one power, smaller two adjacent powers in power magnitude indicate a greater difference between the two powers.

19. The method according to any one of claims 12 to 18, wherein the method further comprises:
sending second information, wherein the second information indicates the time-frequency resource of the first reference signal.

20. The method according to claim 19, wherein the second information further indicates the terminal device to send the first reference signal.

21. The method according to claim 20, wherein the second information comprises a bit indicating the terminal device to send the first reference signal; or the second information comprises a bit indicating the terminal device to send the first reference signal and a bit indicating the terminal device to send a second reference signal.

22. A power control apparatus, comprising a processing unit and a transceiver unit, wherein the processing unit is configured to determine a second power from at least one power based on a first power of a first reference signal, wherein there is a correspondence between the at least one power and at least one parameter; and the transceiver unit is configured to send the first reference signal based on the second power.

23. The power control apparatus according to claim 22, wherein the at least one parameter comprises at least one of the following: a time-frequency resource of a reference signal, a sequence of a reference signal, or an index.

24. The power control apparatus according to claim 22 or 23, wherein the at least one parameter is the time-frequency resource; and that the transceiver unit is configured to send the first reference signal based on the second power comprises: the transceiver unit is configured to send, based on the second power, the first reference signal on a time-frequency resource corresponding to the second power.

25. The power control apparatus according to any one of claims 22 to 24, wherein the at least one parameter is the sequence; and the processing unit is further configured to: generate the first reference signal based on a sequence corresponding to the second power.

26. The power control apparatus according to any one of claims 22 to 25, wherein the at least one parameter is the index; and the transceiver unit is further configured to: send first information to a network device, wherein the first information comprises or indicates an index corresponding to the second power.

27. The power control apparatus according to any one of claims 22 to 26, wherein the first power is a power determined based on a first power control parameter.

28. The power control apparatus according to any one of claims 22 to 27, wherein

the second power is a minimum power of one or more powers that are greater than or equal to the first power and that are of the at least one power; the second power is a maximum power of one or more powers that are less than or equal to the first power and that are of the at least one power; or the second power is a power that has a smallest deviation from the first power and that is of the at least one power.

29. The power control apparatus according to any one of claims 22 to 28, wherein in the at least one power, smaller two adjacent powers in power magnitude indicate a greater difference between the two powers.

30. The power control apparatus according to any one of claims 22 to 29, wherein the transceiver unit is further configured to: receive second information, wherein the second information indicates a time-frequency resource of the first reference signal.

31. The power control apparatus according to claim 30, wherein the second information further indicates a terminal device to send the first reference signal.

32. The power control apparatus according to claim 31, wherein the second information comprises a bit indicating the terminal device to send the first reference signal; or the second information comprises a bit indicating the terminal device to send the first reference signal and a bit indicating the terminal device to send a second reference signal.

33. A power control apparatus, comprising a processing unit and a transceiver unit, wherein

the transceiver unit is configured to receive a first reference signal; and
the processing unit is configured to determine a second power of the first reference signal, wherein the second power is one of at least one power, and there is a correspondence between the at least one power and at least one parameter.

34. The power control apparatus according to claim 33, wherein the at least one parameter comprises at least one of the following:
a time-frequency resource of a reference signal, a sequence of a reference signal, or an index of a power.

35. The power control apparatus according to claim 33 or 34, wherein the at least one parameter is the time-frequency resource of the reference signal; and
that the processing unit is configured to determine a second power of the first reference signal comprises:
the processing unit determines a power corresponding to a time-frequency resource of the first reference signal as the second power.

36. The power control apparatus according to any one of claims 33 to 35, wherein the at least one parameter is the sequence of the reference signal; and
the processing unit is further configured to:
the processing unit determines a power corresponding to a sequence of the first reference signal as the second power.

37. The power control apparatus according to any one of claims 33 to 36, wherein the at least one parameter is the index;
the transceiver unit is further configured to:

receive first information, wherein the first information comprises or indicates an index corresponding to the second power; and
that the processing unit is configured to determine a second power of the first reference signal comprises:
the processing unit determines the second power based on the index.

38. The power control apparatus according to any one of claims 33 to 37, wherein

the second power is a minimum power of one or more powers that are greater than or equal to a first power and that are of the at least one power;
the second power is a maximum power of one or more powers that are less than or equal to the first power and that are of the at least one power; or
the second power is a power that has a smallest deviation from the first power and that is of the at least one power.

39. The power control apparatus according to any one of claims 33 to 38, wherein in the at least one power, smaller two adjacent powers in power magnitude indicate a greater difference between the two powers.

40. The power control apparatus according to any one of claims 33 to 39, wherein the transceiver unit is further configured to:
send second information, wherein the second information indicates the time-frequency resource of the first reference signal.

41. The power control apparatus according to claim 40, wherein the second information further indicates a terminal device to send the first reference signal.

42. The power control apparatus according to claim 41, wherein the second information comprises a bit indicating the terminal device to send the first reference signal; or the second information comprises a bit indicating the terminal device to send the first reference signal and a bit indicating the terminal device to send a second reference signal.

43. A computer-readable storage medium, comprising a computer program, wherein when the computer program is run on a computer,

the computer is enabled to perform the method according to any one of claims 1 to 11, or
the computer is enabled to perform the method according to any one of claims 12 to 21.

44. A computer program product, wherein the computer program product comprises a computer program, and when the computer program is run,

the computer is enabled to perform the method according to any one of claims 1 to 11, or
the computer is enabled to perform the method according to any one of claims 12 to 21.

45. A power control apparatus, comprising a processor, wherein the processor is coupled to a memory, the memory is configured to store a program or instructions, and when the program or the instructions are executed by the processor, the apparatus is enabled to perform the method according to any one of claims 1 to 11, or the apparatus is enabled to perform the method according to any one of claims 12 to 21.

FIG. 1

(a)

(b)

FIG. 2

Method 100

FIG. 3

Sent by using the time-frequency resource
#1, the time-frequency resource #2, the
sequence #1, or the sequence #2

Power level #1
(power level 1) — — — — — — — — — — — — — — — — — — — — — — — — Time-frequency
resource #1, or
sequence #1

□ First-type SRS #1    Time-frequency
resource #2, or
sequence #2

Power level #2
(power level 2) — — — — — — — — — — — — — — — — — — — — — — — —

□ First-type SRS #2

Power level #3
(power level 3) — — — — — — — — — — — — — — — — — — — — — — — — Time-frequency
resource #3, or
sequence #3

□ First-type SRS #3  Time-frequency
resource #4, or
sequence #4

Power level #4
(power level 4) — — — — — — — — — — — — — — — — — — — — — — — —

FIG. 4

Power level #1
(power level 1) — — — — — — — — — — — — — — — — — — — — — — — — Index #1
(index #1)

□ First-type SRS #4

Power level #2
(power level 2) — — — — — — — — — — — — — — — — — — — — — — — — Index #2
(index #2)

□ First-type SRS #5

Power level #3
(power level 3) — — — — — — — — — — — — — — — — — — — — — — — — Index #3
(index #3)

□ First-type SRS #6

Power level #4
(power level 4) — — — — — — — — — — — — — — — — — — — — — — — — Index #4
(index #4)

Power level #5
(power level 2) — — — — — — — — — — — — — — — — — — — — — — — — Index #5
(index #5)

...

Power level #N
(power level N) — — — — — — — — — — — — — — — — — — — — — — — — Index #N
(index #N)

FIG. 5

Method 500

```
┌─────────┐                                                    ┌──────────┐
│   UE    │                                                    │   Base   │
│         │   S510: The base station sends a power control     │ station  │
└────┬────┘   parameter of an uplink measurement signal to the UE └────┬───┘
     │◄───────────────────────────────────────────────────────────────│
┌──────────────────────┐                                              │
│ S520: Determine a power │                                            │
│  of a first-type uplink │                                            │
│  measurement signal    │                                             │
└──────────┬───────────┘                                              │
     │                                                                 │
     │      S520: Send a second-type uplink measurement signal        │
     │              based on the obtained power                        │
     │────────────────────────────────────────────────────────────────►│
     │    S530: Send third information, where the third information    │
     │ indicates whether a transmit power of the first-type uplink     │
     │   measurement signal is determined based on a second           │
     │              power control parameter                            │
     │────────────────────────────────────────────────────────────────►│
```

S540: The base station performs detection on the third information to determine the transmit power of the first-type uplink measurement signal

S550: Determine path loss information

S560: Send the path loss information to the UE

S570: The UE receives the path loss information and determines a power of an uplink signal or uplink data that is to-be-transmitted

FIG. 6

EP 4 277 383 A1

Base station — Send downlink control information #1 | The base station performs detection on the uplink control information #1 | The base station sends downlink control information #2 | The base station performs detection on the uplink control information #2 | The base station sends downlink control information #3 | The base station performs detection on the uplink control information #3

UE — The UE successfully detects and demodulates the downlink control information #1 | The UE sends uplink control information #1, including an ACK message | The UE successfully detects and demodulates the downlink control information #2 | The UE sends uplink control information #2, including the ACK message | The UE fails to detect or demodulate the downlink control information #3 | The UE sends uplink control information #3, including an NACK message

FIG. 7

Power control apparatus 100

Transceiver unit 110

Processing unit 120

FIG. 8

Power control apparatus 200

Transceiver unit 210

Processing unit 220

FIG. 9

## INTERNATIONAL SEARCH REPORT

| | International application No. |
|---|---|
| | **PCT/CN2021/073676** |

**A.    CLASSIFICATION OF SUBJECT MATTER**

H04W 72/02(2009.01)i;  H04W 72/04(2009.01)n

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNKI; CNABS; CNTXT; WOTXT; EPTXT; USTXT; VEN; 3GPP: 第1, 第2, 第一, 第二, 路径损耗, 路损, 基站, 功率, 时频, 探测参考信号, first, second, path loss, bs, basestation, power, time frequency, SRS, H04W72/0413/CPC, H04W72/0473/CPC

**C.    DOCUMENTS CONSIDERED TO BE RELEVANT**

| Category* | Citation of document, with indication, where appropriate, of the relevant passages | Relevant to claim No. |
|---|---|---|
| X | CN 109150477 A (HUAWEI TECHNOLOGIES CO., LTD.) 04 January 2019 (2019-01-04) description paragraphs 0210-0326 | 1-45 |
| X | CN 111436036 A (HUAWEI TECHNOLOGIES CO., LTD.) 21 July 2020 (2020-07-21) description paragraphs 0181-0488 | 1, 6-12, 17-22, 27-33, 38-45 |
| Y | CN 111436036 A (HUAWEI TECHNOLOGIES CO., LTD.) 21 July 2020 (2020-07-21) description paragraphs 0181-0488 | 2-3, 13-14, 23-24, 34-35 |
| Y | US 2010113051 A1 (NOKIA SIEMENS NETWORKS OY) 06 May 2010 (2010-05-06) claims 10-11 | 2-3, 13-14, 23-24, 34-35 |
| A | US 2013223392 A1 (LG ELECTRONICS INC.) 29 August 2013 (2013-08-29) entire document | 1-45 |
| A | US 2016192361 A1 (OFINNO TECHNOLOGIES, L.L.C.) 30 June 2016 (2016-06-30) entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 May 2021** | **10 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/073676**

| Patent document cited in search report | | | Publication date (day/month/year) | Patent family member(s) | | | Publication date (day/month/year) |
|---|---|---|---|---|---|---|---|
| CN | 109150477 | A | 04 January 2019 | EP | 3595225 | A4 | 08 April 2020 |
| | | | | EP | 3595225 | A1 | 15 January 2020 |
| | | | | US | 2020084732 | A1 | 12 March 2020 |
| | | | | WO | 2019001248 | A1 | 03 January 2019 |
| | | | | IN | 201937042521 | A | 13 December 2019 |
| CN | 111436036 | A | 21 July 2020 | WO | 2020143835 | A1 | 16 July 2020 |
| US | 2010113051 | A1 | 06 May 2010 | WO | 2010060749 | A1 | 03 June 2010 |
| | | | | US | 2014269570 | A1 | 18 September 2014 |
| | | | | US | 9185721 | B2 | 10 November 2015 |
| US | 2013223392 | A1 | 29 August 2013 | WO | 2012057578 | A2 | 03 May 2012 |
| | | | | EP | 3761534 | A1 | 06 January 2021 |
| | | | | KR | 20130092584 | A | 20 August 2013 |
| | | | | KR | 20130069806 | A | 26 June 2013 |
| | | | | CN | 106411461 | B | 21 January 2020 |
| | | | | WO | 2012057579 | A2 | 03 May 2012 |
| | | | | WO | 2012057578 | A3 | 21 June 2012 |
| | | | | CN | 106411461 | A | 15 February 2017 |
| | | | | WO | 2012057579 | A3 | 26 July 2012 |
| | | | | JP | 2013545385 | A | 19 December 2013 |
| | | | | EP | 2635076 | A2 | 04 September 2013 |
| | | | | AU | 2011321131 | B2 | 18 June 2015 |
| | | | | KR | 101569258 | B1 | 20 November 2015 |
| | | | | CN | 105959087 | B | 27 March 2020 |
| | | | | CN | 103190100 | A | 03 July 2013 |
| | | | | CN | 103190100 | B | 15 June 2016 |
| | | | | US | 2014219153 | A1 | 07 August 2014 |
| | | | | CN | 105959087 | A | 21 September 2016 |
| | | | | EP | 2634939 | A2 | 04 September 2013 |
| | | | | EP | 2635076 | A4 | 07 December 2016 |
| | | | | US | 9282561 | B2 | 08 March 2016 |
| | | | | US | 2016157190 | A1 | 02 June 2016 |
| | | | | EP | 2634939 | A4 | 07 December 2016 |
| | | | | KR | 101558716 | B1 | 07 October 2015 |
| | | | | US | 2013208710 | A1 | 15 August 2013 |
| | | | | US | 9042262 | B2 | 26 May 2015 |
| | | | | US | 8737257 | B2 | 27 May 2014 |
| | | | | AU | 2011321131 | A1 | 23 May 2013 |
| | | | | CN | 103190183 | A | 03 July 2013 |
| | | | | CN | 103190183 | B | 10 August 2016 |
| | | | | US | 9756585 | B2 | 05 September 2017 |
| | | | | EP | 2635076 | B1 | 09 September 2020 |
| | | | | US | 2015245356 | A1 | 27 August 2015 |
| US | 2016192361 | A1 | 30 June 2016 | US | 9763203 | B2 | 12 September 2017 |
| | | | | US | 2017118753 | A9 | 27 April 2017 |
| | | | | US | 10523389 | B2 | 31 December 2019 |
| | | | | US | 10523390 | B2 | 31 December 2019 |
| | | | | US | 9681399 | B2 | 13 June 2017 |
| | | | | US | 9319194 | B2 | 19 April 2016 |
| | | | | US | 2018014263 | A1 | 11 January 2018 |
| | | | | US | 9769772 | B2 | 19 September 2017 |

Form PCT/ISA/210 (patent family annex) (January 2015)

**INTERNATIONAL SEARCH REPORT**
Information on patent family members

| International application No. |
| --- |
| **PCT/CN2021/073676** |

| Patent document cited in search report | Publication date (day/month/year) | Patent family member(s) | | Publication date (day/month/year) |
| --- | --- | --- | --- | --- |
| | | US | 2020204319 A1 | 25 June 2020 |
| | | US | 2013279433 A1 | 24 October 2013 |
| | | US | 2016080126 A1 | 17 March 2016 |
| | | US | 2013279434 A1 | 24 October 2013 |
| | | US | 2015131590 A1 | 14 May 2015 |
| | | US | 9204406 B2 | 01 December 2015 |
| | | US | 2013279435 A1 | 24 October 2013 |
| | | US | 8964683 B2 | 24 February 2015 |
| | | US | 2015146660 A1 | 28 May 2015 |
| | | US | 2018249427 A1 | 30 August 2018 |
| | | US | 9642098 B2 | 02 May 2017 |
| | | US | 2015181547 A1 | 25 June 2015 |
| | | US | 8971280 B2 | 03 March 2015 |
| | | US | 8989128 B2 | 24 March 2015 |
| | | US | 2016316440 A1 | 27 October 2016 |

Form PCT/ISA/210 (patent family annex) (January 2015)